(19) Europäisches Patentamt
European Patent Office
Office européen des brevets

(11) EP 4 737 394 A1

(12) EUROPEAN PATENT APPLICATION

(43) Date of publication:
**06.05.2026 Bulletin 2026/19**

(21) Application number: **25203931.8**

(22) Date of filing: **23.09.2025**

(51) International Patent Classification (IPC):
***C01G 51/68*** *(2025.01)*

(52) Cooperative Patent Classification (CPC):
**C01G 51/68;** C01P 2002/72; C01P 2004/03; C01P 2006/40

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.10.2024 KR 20240144313**

(71) Applicant: **Samsung Electronics Co., Ltd.**
**Suwon-si, Gyeonggi-do 16677 (KR)**

(72) Inventors:
- **KIM, Jusik**
  **16678 Suwon-si (KR)**
- **JUNG, Doh Won**
  **16678 Suwon-si (KR)**
- **LEE, Seungbok**
  **16678 Suwon-si (KR)**
- **JI, Sang Min**
  **16678 Suwon-si (KR)**
- **CHOI, Bokkyu**
  **16678 Suwon-si (KR)**

(74) Representative: **Elkington and Fife LLP**
**Prospect House**
**8 Pembroke Road**
**Sevenoaks, Kent TN13 1XR (GB)**

# (54) SOLID ION CONDUCTOR, ELECTRODE AND SOLID OXIDE CELL EACH INCLUDING THE SOLID ION CONDUCTOR

(57) A solid ion conductor, an electrode, and a solid oxide cell. The solid ion conductor including a metal oxide having a perovskite structure. The metal oxide includes a first, a second, and a third element, each arranged in a cuboctahedral site of the perovskite structure, and includes a fourth and a fifth element, each arranged in an octahedral site of the perovskite structure, or includes a fourth, a fifth, and a sixth element, each arranged in an octahedral site of the perovskite structure, wherein the first element belongs to Group 3 of the Periodic Table, the second element and the third element each belong to Group 2 and have an atomic weight of 30 or more, the fourth and fifth element each belong to one of Groups 8 to 11, and the sixth element belongs to one of Groups 3, 4, or 7 to 12 of the Periodic Table.

FIG. 5

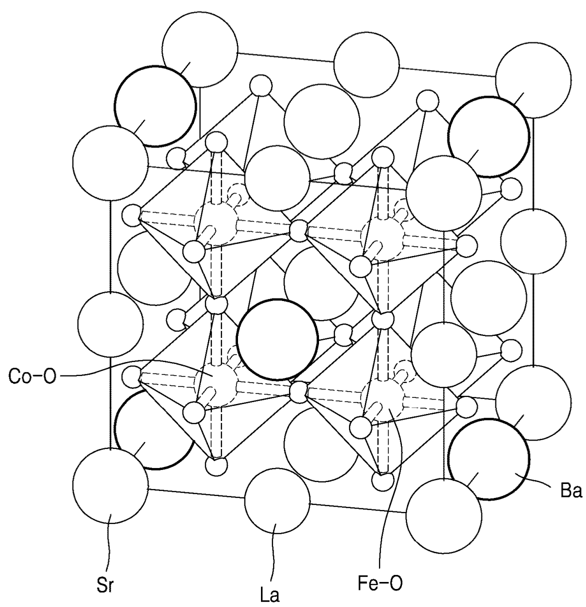


EP 4 737 394 A1

## Description

FIELD OF THE INVENTION

The disclosure relates to a solid ion conductor, and an electrode and a solid oxide cell each including the solid ion conductor.

BACKGROUND OF THE INVENTION

Solid oxide cells may operate in fuel cell mode, where they generate electricity by oxidizing fuel and reducing air.
Solid oxide cells may operate in electrolysis cell mode, where they produce hydrogen by electrolyzing water.
While a solid oxide cell is operating in electrolysis cell mode, the air electrode of the solid oxide cell may deteriorate.

SUMMARY OF THE INVENTION

During the operation of a solid oxide cell in electrolysis mode, high oxygen partial pressure may occur in localized regions within the air electrode, leading to the formation of pores and/or changes in the stoichiometry of the air electrode. Such pore formation and/or stoichiometric changes within the air electrode may reduce active reaction sites in the air electrode, thereby increasing the overpotential in solid oxide cells. An increase in overpotential may further elevate the local oxygen partial pressure within the air electrode, potentially causing delamination between the air electrode and the solid electrolyte layer. During operation of the solid oxide cell in electrolysis mode, metals on the surface of the air electrode may vaporize, and the vaporized metals may diffuse into the solid electrolyte layer, forming an insulating metal oxide phase between the air electrode and the solid electrolyte layer. There is a demand for a solid ion conductor with enhanced structural stability that may suppress delamination between the air electrode and the solid electrolyte layer and inhibit the formation of an insulating phase between them, thereby suppressing deterioration of the air electrode.
Provided is a novel solid ion conductor with improved structural stability.
Provided is an electrode including the solid ion conductor.
Provided is a metal oxide cell including the solid ion conductor.
Additional aspects will be set forth in part in the description which follows and, in part, will be apparent from the description, or may be learned by practice of the presented embodiments of the disclosure.
According to an aspect of the disclosure,

a solid ion conductor includes a metal oxide having a perovskite structure,
wherein the metal oxide includes a first element, a second element, and a third element, each arranged in a cuboctahedral site of the perovskite structure,
and further includes a fourth element and a fifth element, each arranged in an octahedral site of the perovskite structure, or a fourth element, a fifth element and a sixth element, each arranged in an octahedral site of the perovskite structure,
wherein the first element belongs to Group 3 of the Periodic Table,
the second and third elements each belong to Group 2 of the Periodic Table and have an atomic weight of 30 or more,
the fourth and fifth elements each belong to one of Groups 8 to 11 of the Periodic Table,
the sixth element belongs to one of Groups 3, 4, or 7 to 12 of the Periodic Table, and
wherein a content of each of the first element, the second element, and the third element is 0.5 or less relative to the total content of the first, second, and third elements.

According to another aspect of the disclosure,

a solid ion conductor includes a first metal oxide having a perovskite structure,
wherein the first metal oxide includes a first element, a second element, and a third element, each arranged in a cuboctahedral site of the perovskite structure,
and includes a fourth element and a fifth element, each arranged in an octahedral site of the perovskite structure, or a fourth element, a fifth element and a sixth element arranged in an octahedral site of the perovskite structure,
wherein the first element belongs to Group 3 of the Periodic Table,
the second element and the third element each belong to Group 2 of the Periodic Table and have an atomic weight of 30 or more,
the fourth element and the fifth element each independently belong to one of Groups 8 to 11 of the Periodic Table,
the sixth element belongs to one of Group 3, 4, or 7 to 12 of the Periodic Table, and

wherein the formation energy of the first metal oxide is about -0.8 electronvolt (eV) to about -10 eV relative to the formation energy of a second metal oxide formed by excluding the first element from the first metal oxide.

According to another aspect of the disclosure,
an electrode includes a solid ion conductor according to the aspect.

According to another aspect of the disclosure,

a solid oxide cell includes an air electrode, a fuel electrode, and
a solid electrolyte layer disposed between the air electrode and the fuel electrode,
wherein one or more of the air electrode, the fuel electrode, and the solid electrolyte layer include the solid ion conductor described above.

BRIEF DESCRIPTION OF THE DRAWINGS

The above and other aspects, features, and advantages of certain embodiments of the disclosure will be more apparent from the following description taken in conjunction with the accompanying drawings, in which:

FIG. 1 is an X-ray diffraction (XRD) spectrum showing intensity (counts) versus angle (2 theta, 2θ) of the solid ion conductor manufactured in Example 1;
FIG. 2 is an XRD spectrum showing intensity (counts) versus angle (2 theta, 2θ) of the solid ion conductor manufactured in Example 3;
FIG. 3 is an XRD spectrum showing intensity (counts) versus angle (2 theta, 2θ) of the solid ion conductor manufactured in Example 4;
FIG. 4 is an XRD spectrum showing intensity (counts) versus angle (2 theta, 2θ) of the solid ion conductor manufactured in Example 5;
FIG. 5 is a schematic diagram showing the crystal structure of the solid ion conductor including a metal oxide with a perovskite structure manufactured in Examples 1 to 5;
FIG. 6A is a Nyquist plot showing the impedance measurement results (ohms square centimeters, $\Omega \cdot cm^2$) before and after applying a constant current to the solid oxide cell manufactured in Example 1;
FIG. 6B is a Nyquist plot showing the impedance measurement results (ohms square centimeters, $\Omega \cdot cm^2$) before applying a constant current to the solid oxide cell manufactured in Example 1, and is an enlarged view of the left-side Nyquist plot in FIG. 6A;
FIG. 6C is a Nyquist plot showing the impedance measurement results (ohms square centimeters, $\Omega \cdot cm^2$) after applying a constant current to the solid oxide cell manufactured in Example 1, and is an enlarged view of the right-side Nyquist plot in FIG. 6A;
FIG. 6D is a graph showing voltage changes (volts, V) versus time (hour, h) during application of a constant current to the solid oxide cell manufactured in Example 1;
FIG. 7A is a Nyquist plot showing the impedance measurement results (ohms square centimeters, $\Omega \cdot cm^2$) before and after applying a constant current to the solid oxide cell manufactured in Example 2;
FIG. 7B is a Nyquist plot showing the impedance measurement results (ohms square centimeters, $\Omega \cdot cm^2$) before applying a constant current to the solid oxide cell manufactured in Example 2, and is an enlarged view of the left-side Nyquist plot in FIG. 7A;
FIG. 7C is a Nyquist plot showing the impedance measurement results (ohms square centimeters, $\Omega \cdot cm^2$) after applying a constant current to the solid oxide cell manufactured in Example 2, and is an enlarged view of the right-side Nyquist plot in FIG. 7A;
FIG. 7D is a graph showing voltage changes (volts, V) versus time (hour, h) during application of a constant current to the solid oxide cell manufactured in Example 2;
FIG. 8A is a Nyquist plot showing the impedance measurement results (ohms square centimeters, $\Omega \cdot cm^2$) before and after applying a constant current to the solid oxide cell manufactured in Example 3;
FIG. 8B is a Nyquist plot showing the impedance measurement results (ohms square centimeters, $\Omega \cdot cm^2$) before applying a constant current to the solid oxide cell manufactured in Example 3, and is an enlarged view of the left-side Nyquist plot in FIG. 8A;
FIG. 8C is a Nyquist plot showing the impedance measurement results (ohms square centimeters, $\Omega \cdot cm^2$) after applying a constant current to the solid oxide cell manufactured in Example 3, and is an enlarged view of the right-side Nyquist plot in FIG. 8A;
FIG. 8D is a graph showing voltage changes (volts, V) versus time (hour, h) while applying a constant current to the solid oxide cell manufactured in Example 3;
FIG. 9A is a Nyquist plot showing the impedance measurement results (ohms square centimeters, $\Omega \cdot cm^2$) before and

after applying a constant current to the solid oxide cell manufactured in Example 4;

FIG. 9B is a Nyquist plot showing the impedance measurement results (ohms square centimeters, $\Omega \cdot cm^2$) before applying a constant current to the solid oxide cell manufactured in Example 4, and is an enlarged view of the left-side Nyquist plot in FIG. 9A;

FIG. 9C is a Nyquist plot showing the impedance measurement results (ohms square centimeters, $\Omega \cdot cm^2$) after applying a constant current to the solid oxide cell manufactured in Example 4, and is an enlarged view of the right-side Nyquist plot in FIG. 9A;

FIG. 9D is a graph showing voltage changes (volts, V) versus time (hour, h) during applying a constant current to the solid oxide cell manufactured in Example 4;

FIG. 10A is a Nyquist plot showing the impedance measurement results (ohms square centimeters, $\Omega \cdot cm^2$) before and after applying a constant current to the solid oxide cell manufactured in Comparative Example 1;

FIG. 10B is a Nyquist plot showing the impedance measurement results (ohms square centimeters, $\Omega \cdot cm^2$) before applying a constant current to the solid oxide cell manufactured in Comparative Example 1, and is an enlarged view of the left-side Nyquist plot in FIG. 10A;

FIG. 10C is a Nyquist plot showing the impedance measurement results (ohms square centimeters, $\Omega \cdot cm^2$) after applying a constant current to the solid oxide cell manufactured in Comparative Example 1, and is an enlarged view of the right-side Nyquist plot in FIG. 10A;

FIG. 10D is a graph showing voltage changes (volts, V) versus time (hour, h) while applying a constant current to the solid oxide cell manufactured in Comparative Example 1;

FIG. 11 is a scanning electron microscope image of a cross-section of a solid oxide cell manufactured in Example 1 after a constant current was applied for 120 hours;

FIG. 12 is a scanning electron microscope image of a cross-section of a solid oxide cell manufactured in Comparative Example 1 after applying a constant current for 120 hours;

FIG. 13 is a cross-sectional schematic diagram of an electrode according to an embodiment;

FIG. 14 is a cross-sectional schematic diagram of a solid oxide cell according to an embodiment;

FIG. 15 is a cross-sectional schematic diagram of a solid oxide cell according to an embodiment; and

FIG. 16 is an exploded perspective view of a solid oxide cell stack according to an embodiment.

## DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Various embodiments have been illustrated in the accompanying drawings. However, the inventive concept may be embodied in many other forms and should not be construed as limited to the embodiments described herein. Rather, these embodiments are provided so that the disclosure may be thorough and complete and to fully convey the scope of the inventive concept to those skilled in the art. Identical reference numerals denote identical components.

When a component is described as being "on" another component, it may be directly on another component or intervening components may be present. In contrast, when a component is described as being "directly on" another component, no intervening components are present.

Terms such as "first," "second," and "third" may be used herein to describe various components, ingredients, regions, layers, and/or zones, but are not limited by these terms. These terms are used only to distinguish one component, ingredient, region, layer or zone from another component, ingredient, region, layer or zone. Accordingly, a first component, ingredient, region, layer or zone described below may be referred to as a second component, ingredient, region, layer or zone without departing from the teachings of this disclosure.

The terminology used herein is for the purpose of describing particular embodiments only and is not intended to limit the inventive concept. As used herein, the singular form is intended to include the plural form including "at least one," unless the context clearly dictates otherwise. The term "at least one" should not be construed as being limited to a singular form. As used herein, the term "and/or" includes any and all combinations of one or more of the listed items. The terms "comprises" and/or "comprising," as used in the detailed description, specify the presence of stated features, regions, integers, steps, operations, components, and/or elements, but do not preclude the presence or addition of one or more other features, regions, integers, steps, operations, components, elements, and/or groups thereof.

Spatially relative terms, such as "beneath," "below," "lower," "above," "upper," "top," and the like, may be used herein to describe a relationship between one component or feature and another component or feature. It will be understood that spatially relative terms are intended to encompass different orientations of the device when used or operated in addition to the orientations depicted in the drawings. For example, if a device in the drawings is turned upside down, components or features described as "below" or "beneath" other components or features would then be oriented "above" the other components or features. Thus, the term "below" may encompass both upward and downward directions. The device may be disposed in other orientations (rotated 90 degrees or otherwise), and the spatially relative terms used herein may be interpreted accordingly.

As used herein, the expression "free of a tetragonal phase" refers to a material or substance that does not contain a detectable tetragonal crystal structure or phase. It also can mean that its crystal structure does not include the particular arrangement that a tetragonal structure contains.

Unless otherwise defined, all terms (including technical and scientific terms) used herein have the same meaning as commonly understood by one of ordinary skill in the art to which this disclosure belongs. It will also be understood that terms such as those defined in commonly used dictionaries should be interpreted as having meanings consistent with the context of the relevant art and the disclosure, and should not be interpreted in an idealized or overly formal sense.

Embodiments are described herein with reference to schematic cross-sectional views of idealized embodiments. As such, variations from the shapes of the illustrations resulting from manufacturing techniques and/or tolerances are to be expected. Thus, the embodiments described herein should not be construed as limited to the specific shapes of regions illustrated, but are to include deviations in shapes resulting from manufacturing. For example, regions illustrated or described as being flat may be rough and/or include nonlinear features. Moreover, sharp angles illustrated may be rounded. Thus, the regions illustrated in the drawings are schematic in nature and their shapes are not intended to illustrate precise shapes of regions, nor are they intended to limit the scope of the claims.

The term "Group" refers to the groups in the periodic table of elements according to the 1-18 group classification system of the International Union of Pure and Applied Chemistry ("IUPAC").

The term "particle size" as used herein refers to the average diameter for spherical particles and the average long axis length for non-spherical particles. Particle size may be measured using a particle size analyzer (PSA). "Particle size" refers to, for example, the average particle size. "Average particle size" refers to, for example, the median particle diameter, D50.

As used herein, the term "solid ion conductor" refers to a solid material having ion conductivity for oxygen ions ($O^{2-}$) or protons ($H^+$).

As used herein, the term "metal" includes both metals and metalloids such as silicon and germanium, either in elemental or ionic states.

"As used herein, "alloy" means a metallic material comprising two or more elements, at least one of which is a metal as defined herein."

As used herein, the term "fuel electrode" refers to an electrode in a solid oxide cell that receives a fluid containing fuel such as hydrogen in fuel cell mode.

As used herein, the term "fuel electrode" refers to an electrode in a solid oxide cell that receives a fluid containing fuel such as water or carbon dioxide in electrolysis cell mode.

As used herein, the terms "air electrode" and "oxygen electrode" refer to an electrode in a solid oxide cell that receives a fluid containing oxygen in fuel cell mode. The fluid containing oxygen may include air.

As used herein, the terms "air electrode" and "oxygen electrode" refer to an electrode in a solid oxide cell that releases a fluid containing oxygen in electrolysis cell mode.

As used herein, the terms "positive electrode" and "cathode" refer to an electrode in a solid oxide cell where reduction of oxygen occurs in fuel cell mode.

As used herein, the terms "negative electrode" and "anode" refer to an electrode in a solid oxide cell where oxidation of fuel occurs in fuel cell mode.

As used herein, the terms "negative electrode" and "cathode" refer to an electrode in a solid oxide cell where reduction of fuel occurs in electrolysis cell mode by electrons supplied from outer power source.

As used herein, the terms "positive electrode" and "anode" refer to an electrode in a solid oxide cell where oxidation of oxygen ions or the like occurs in electrolysis cell mode.

Although specific embodiments have been described, alternatives, modifications, variations, improvements, and substantial equivalents that may not currently be anticipated or foreseeable could arise for the applicant or those skilled in the art. Therefore, the appended claims, as filed and as amended, are intended to encompass all such alternatives, modifications, variations, improvements, and substantial equivalents.

Hereinafter, a solid ion conductor, and an electrode and a solid oxide cell including the solid ion conductor according to an embodiment will be described in more detail.

Solid ion conductor

A solid ion conductor according to an embodiment may include a metal oxide having a perovskite structure. The metal oxide may include a first element, a second element, and a third element, disposed at cuboctahedral sites of the perovskite structure; and includes a fourth element and a fifth element, disposed at octahedral sites of the perovskite structure, or include a fourth element, a fifth element, and a sixth element, disposed at octahedral site of the perovskite structure. The first element may belong to Group 3 of the Periodic Table. The second element and the third element may each belong to Group 2 of the Periodic Table and have an atomic weight of 30 or more. The fourth element and the fifth elements may each belong to one of Groups 8 to 11 of the Periodic Table. The sixth element may belong to one of Groups 3, 4, or 7 to 12 of the Periodic Table.

A content of each of the first element, the second element, and the third element may be 0.5 or less relative to the total content of the first, second, and third elements. The sixth element may be additionally present or not present in the cuboctahedral site. The content of the first element may be about 0.01 to about 0.5, about 0.05 to about 0.5, about 0.05 to about 0.45, about 0.05 to about 0.4, about 0.05 to about 0.35, or about 0.05 to about 0.3, relative to the total content of the first, second, and third elements. The content of the second element may be about 0.01 to about 0.5, about 0.05 to about 0.5, about 0.05 to about 0.45, about 0.05 to about 0.4, about 0.05 to about 0.35, or about 0.05 to about 0.3, relative to the total content of the first, second, and third elements. The content of the third element may be about 0.01 to about 0.5, about 0.05 to about 0.5, about 0.05 to about 0.45, about 0.05 to about 0.4, about 0.05 to about 0.35, or about 0.05 to about 0.3, relative to the total content of the first, second, and third elements. The content of the first element, the second element or the third element may be the ratio of the moles of each of the first element, the second element or the third element to the total moles of the first, second, and third elements.

Without being bound by theory, it is believed that by having the first element in the solid ion conductor within the aforementioned content, it is possible to alter the coordination state of the second and/or third element in the cuboctahedral site. For example, by having the first element with a reduced ionic radius compared to the second element and/or the third element, it is possible to reduce the elastic energy caused by lattice distortion due to the second element and/or the third element. The reduced elastic energy may enhance the phase stability of the crystalline phase, which includes the first to fifth elements or the first to sixth elements. By altering the coordination state of the second element and/or the third element, it is possible to suppress the vaporization and/or diffusion of the second element and/or the third element during the operation of a solid oxide cell containing the solid ion conductor. For example, it may suppress destabilization of the crystalline phase caused by desorption of the second element and/or the third element in the solid ion conductor. The vaporized second element and/or third element may diffuse into the solid electrolyte layer, causing segregation of the second element and/or the third element. The segregated second and/or third elements may form an insulating phase between the solid electrolyte layer and the air electrode during the operation of the solid oxide cell. By having the first element in the solid ion conductor within the aforementioned content, the formation of the insulating phase may be suppressed. Consequently, the structural stability of the solid oxide cell may be preserved.

Further without being bound by theory, it is believed that by having the second element and/or the third element in the solid ion conductor within the aforementioned content, the concentration of oxygen vacancies may increase, oxygen vacancy ordering may be enhanced, and ion conduction pathways may be extended. For example, the formation of defects such as a Brownmiller-like phase may be suppressed. With the second and/or the third element within the aforementioned content range, and as the content of the second and/or third element decreases, the segregation of the second and/or the third element may be more effectively suppressed.

Still further without being bound by theory, it is believed that by including the fourth and fifth elements, which are different, in the solid ion conductor, the activation energy for oxygen transport (e.g., vacancy hopping) within the solid ion conductor may be reduced. By including the fourth and fifth elements, the solid ion conductor may achieve enhanced oxygen ion conductivity. By including the fourth and fifth elements, the solid ion conductor may be a mixed conductor, possessing both electronic conductivity and ionic conductivity.

Yet further without being bound by theory, being a mixed conductor, the solid ion conductor may increase active reaction sites at two phase boundaries such as solid/gas or solid/solid interfaces, and provide a high surface exchange reaction rate. At the two phase boundaries, the reaction kinetics of the oxygen reduction reaction (ORR) and oxygen evolution reaction (OER) may be enhanced, and the phase stability of the crystalline phase can be improved. For example, the oxygen evolution reaction may proceed uniformly within the electrode, suppressing the increase in local oxygen partial pressure within the air electrode. This, in turn, may prevent the occurrence of local stress within the air electrode and/or at the interface between the air electrode and the electrolyte layer. For example, the thermal expansion coefficient (TEC) of a solid ion conductor may be reduced. Delamination between the air electrode and the reaction barrier layer and/or the solid electrolyte layer may be suppressed. Deterioration of the solid ion conductor may be suppressed even after long-term operation of a solid oxide cell.

Further without being bound by theory, by including the sixth element, the solid ion conductor may exhibit a reduced lattice parameter. With the reduced lattice parameter, the thermal expansion coefficient (TEC) of the solid ion conductor may be further decreased. For example, the bond strength between the fifth and/or sixth element and oxygen atoms in the octahedral site may be weakened, reducing the activation energy for oxygen hopping. This may result in the solid ion conductor having further improved oxygen ion conductivity.

In the solid ion conductor, for example, the combined content of the first and second elements may be greater than the content of the third element. By having the combined content of the first and second elements greater than the content of the third element, lattice distortion and/or segregation of the third element, which may occur due to excessive third element content, may be suppressed.

In the solid ion conductor, for example, the combined content of the second and third elements may be equal to or greater than the content of the first element. Since the sum of the contents of the second and third elements is equal to or greater than the content of the first element, it may be possible to suppress lattice distortion and/or a decrease in the concentration of oxygen vacancies that may occur due to an excessive increase in the content of the first element.

In a solid ion conductor, for example, the sum of the contents of the first element and the third element may be equal to or greater than the content of the second element. By having the sum of the contents of the first element and the third element equal to or greater than the content of the second element, lattice distortion and/or a decrease in the concentration of oxygen vacancies, which may occur due to excessive content of the first element, may be suppressed. For example, the second element may be Sr, and the third element may be Ba.

The solid ion conductor includes a metal oxide, and the metal oxide may include a cubic phase, a hexagonal phase, or a combination thereof. The metal oxide may include a cubic phase. The metal oxide may include a cubic phase, and the phase fraction of the cubic phase may be about 95 weight percent (wt%) to about 100 wt% relative to the total crystalline phase included in the metal oxide. The metal oxide having a cubic phase fraction within this range may result in improved structural stability of the solid ion conductor.

The metal oxide may include a combination of cubic and hexagonal phases. The phase fraction of the cubic phase may be 95 wt% or more, 97 wt% or more, or 99 wt% or more, relative to the total of the cubic phase and the hexagonal phase. By having the cubic phase fraction within this range, the structural stability of the solid ion conductor may be enhanced. The phase fraction of the hexagonal phase may be 5 wt% or less, 3 wt% or less, or 1 wt% or less relative to the total of the cubic phase and hexagonal phase.

The metal oxide may be free of a tetragonal phase. Metal oxides containing cubic phases have a single perovskite structure. Metal oxides containing tetragonal phases have a double perovskite and/or a triple-layer perovskite structure. Metal oxides with a cubic phase in a single perovskite structure are distinct from metal oxides with a tetragonal phase in double and/or triple perovskite structures.

The solid ion conductor may include a metal oxide, and the metal oxide may have a composition represented by Formula 1:

Formula 1 $$M1_{a1}M2_{b1}M3_{c1}M4_{d1}M5_{e1}M6_{f1}O_{3-\delta}$$

wherein in the Formula 1,

$0.01 \le a1 \le 0.5$, $0.01 \le b1 \le 0.5$, $0.01 \le c1 \le 0.5$, $0.1 \le d1 \le 0.9$, $0.1 \le e1 \le 0.9$, $0 \le f1 < 0.2$, and $0 \le \delta < 1$,
M1 is an element belonging to Group 3 of the Periodic Table,
M2 and M3 are elements that belong to Group 2 of the Periodic Table independently and have an atomic weight of 30 or more,
M4 and M5 are elements that are different, each belonging independently to Groups 8 to 11 of the Periodic Table,
M6 is an element belonging to Groups 3, 4, or 7 to 12 of the Periodic Table, and
$\delta$ is an oxygen vacancy.

The structural stability of the solid ion conductor may be further improved by having the metal oxide having the composition of Formula 1.

In the Formula 1, for example, $0.05 \le a1 \le 0.5$, $0.05 \le a1 \le 0.45$, $0.05 \le a1 \le 0.4$, $0.05 \le a1 \le 0.35$ or $0.05 \le a1 \le 0.3$. In the Formula 1, for example, $0.05 \le b1 \le 0.5$, $0.05 \le b1 \le 0.45$, $0.05 \le b1 \le 0.4$, $0.05 \le b1 \le 0.35$ or $0.05 \le b1 \le 0.3$. In the Formula 1, for example, $0.1 \le b1 \le 0.5$, $0.1 \le b1 \le 0.2$, $0.1 \le b1 \le 0.15$, $0.1 \le b1 \le 0.125$. In the Formula 1, for example, $0.05 \le c1 \le 0.5$, $0.05 \le c1 \le 0.45$, $0.05 \le c1 \le 0.4$, $0.05 \le c1 \le 0.35$ or $0.05 \le c1 \le 0.3$. In the Formula 1, for example, $0.1 \le c1 \le 0.5$, $0.2 \le c1 \le 0.45$, $0.2 \le c1 \le 0.4$, $0.2 \le c1 \le 0.375$, $0.2 \le c1 \le 0.3$, $0.2 \le c1 \le 0.25$. In the Formula 1, for example, $0.3 \le d1 \le 0.9$, $0.5 \le d1 \le 0.9$, $0.55 \le d1 \le 0.9$, $0.6 \le d1 \le 0.9$ or $0.7 \le d1 \le 0.9$. In the Formula 1, for example, $0.6 \le d1 \le 0.8$, $0.6 \le d1 \le 0.75$. In the Formula 1, for example, $0.1 \le e1 \le 0.8$, $0.1 \le e1 \le 0.7$, $0.1 \le e1 \le 0.5$, $0.2 \le e1 \le 0.5$ or $0.2 \le e1 \le 0.45$. In the Formula 1, for example, $0.125 \le e1 \le 0.4$, $0.125 \le e1 \le 0.3$, $0.2 \le e1 \le 0.4$, $0.2 \le e1 \le 0.3$, $0.2 \le e1 \le 0.25$. In the Formula 1, for example, $0.01 \le f1 \le 0.2$, $0.01 \le f1 \le 0.17$, $0.01 \le f1 \le 0.15$, $0.01 \le f1 \le 0.13$ or $0.05 \le f1 \le 0.13$. In the Formula 1, for example, $0.05 \le f1 \le 0.2$, $0.1 \le f1 \le 0.2$, $0.1 \le f1 \le 0.0.15$, $0.1 \le f1 \le 0.125$.

In the Formula 1, for example, $a1+b1+c1=1$. In the Formula 1, for example, $d1+e1+f1=1$. In the Formula 1, for example, $d1>e1+f1$.

In the Formula 1, M1 may include a lanthanide element, Sc, Y, or a combination thereof. The phase stability of the solid ion conductor may be further improved by M1 including these elements. The lanthanide elements may include La, Ce, Pr, Nd, Pm, Sm, Eu, Gd, Tb, Dy, Ho, Er, Ym, Yb, Lu or a combination thereof. The lanthanide elements may include La, Pr, Nd or a combination thereof.

In the Formula 1, M2 and M3 may independently include Ca, Sr, Ba, Ra or a combination thereof. The oxygen ion conductivity of the solid ion conductor may be further improved by M2 and M3 including these metals. M2 and M3 may not include Mg.

In the Formula 1, the valence of M1 may be greater than the valence of M2. By having the valence of M1 greater than that of M2, lattice distortion may be alleviated, and phase stability may be improved. The structural stability of solid ion conductors may be improved. The difference in valence between M1 and M2 may be 0.5 or more, 1 or more, or 1.5 or more. The valences of M1 and M2 may be determined using XRD, X-ray photoelectron spectroscopy (XPS), or energy dispersive X-ray analysis (EDX).

In the Formula 1, the ionic radius of M1 may be smaller than the ionic radius of M2. By having the ionic radius of M1 smaller than that of M2, lattice distortion may be alleviated, and phase stability may be improved. The structural stability of solid ion conductors may be improved. The ionic radius of M1 may be 120 picometers (pm) or less. The ionic radius of M1 may be about 100 pm to about 120 pm, or about 100 pm to about 110 pm. The ionic radius of M2 may be 130 pm or more. The ionic radius of M2 may be about 130 pm to about 160 pm, or about 130 pm to about 150 pm. The ionic radii of M1 and M2 are cation ionic radii. The ionic radii of M1 and M2 may be determined from the valence of M1 and M2. Alternatively, the ionic radii of M1 and M2 may be determined by XRD, XPS or EDX.

The solid ion conductor includes a metal oxide, and the metal oxide may have a composition represented by Formula 2:

Formula 2 $La_{a2}Sr_{b2}Ba_{c2}M4_{d2}M5_{e2}M6_{f2}O_{3-\delta}$

wherein in the Formula 2,

$0.01 \le a2 \le 0.5$, $0.01 \le b2 \le 0.5$, $0.01 \le c2 \le 0.5$, $0.1 \le d2 \le 0.9$, $0.1 \le e2 \le 0.9$, $0 \le f2 < 0.2$, and $0 \le \delta < 1$,

M4 and M5 are different, and are independently elements belonging to Groups 8 to 11 of the Periodic Table,

M6 is an element belonging to Group 3, 4, or 7 to 12 of the Periodic Table, and the atomic weight of the element belonging to Group 3 is 150 or more, and

$\delta$ is an oxygen vacancy.

The structural stability of the solid ion conductor may be further improved by having the metal oxide having the composition of Formula 2.

In the Formula 2, for example, $0.05 \le a2 \le 0.5$, $0.05 \le a2 \le 0.45$, $0.05 \le a2 \le 0.4$, $0.05 \le a2 \le 0.35$ or $0.05 \le a2 \le 0.3$. In the Formula 2, for example, $0.05 \le b2 \le 0.5$, $0.05 \le b2 \le 0.45$, $0.05 \le b2 \le 0.4$, $0.05 \le b2 \le 0.35$ or $0.05 \le b2 \le 0.3$. In the Formula 2, for example, $0.1 \le b2 \le 0.5$, $0.1 \le b2 \le 0.2$, $0.1 \le b2 \le 0.15$, $0.1 \le b2 \le 0.125$. In the Formula 2, for example, $0.05 \le c2 \le 0.5$, $0.05 \le c2 \le 0.45$, $0.05 \le c2 \le 0.4$, $0.05 \le c2 \le 0.35$ or $0.05 \le c2 \le 0.3$. In the Formula 2, for example, $0.1 \le c2 \le 0.5$, $0.2 \le c2 \le 0.45$, $0.2 \le c2 \le 0.4$, $0.2 \le c2 \le 0.375$, $0.2 \le c2 \le 0.3$, $0.2 \le c2 \le 0.25$. In the Formula 2, for example, $0.3 \le d2 \le 0.9$, $0.5 \le d2 \le 0.9$, $0.55 \le d2 \le 0.9$, $0.6 \le d2 \le 0.9$ or $0.7 \le d2 \le 0.9$. In the Formula 2, for example, $0.6 \le d2 \le 0.8$, $0.6 \le d2 \le 0.75$. In the Formula 2, for example, $0.1 \le e2 \le 0.8$, $0.1 \le e2 \le 0.7$, $0.1 \le e2 \le 0.5$, $0.2 \le e2 \le 0.5$ or $0.2 \le e2 \le 0.45$. In the Formula 2, for example, $0.125 \le e2 \le 0.4$, $0.125 \le e2 \le 0.3$, $0.2 \le e2 \le 0.4$, $0.2 \le e2 \le 0.3$, $0.2 \le e2 \le 0.25$. In the Formula 2, for example, $0.01 \le f2 \le 0.2$, $0.01 \le f2 \le 0.17$, $0.01 \le f2 \le 0.15$, $0.01 \le f2 \le 0.13$ or $0.05 \le f2 \le 0.13$. In the Formula 2, for example, $0.05 \le f2 \le 0.2$, $0.1 \le f2 \le 0.2$, $0.1 \le f2 \le 0.0.15$, $0.1 \le f2 \le 0.125$.

In the Formula 2, for example, $a2+b2+c2=1$. In the Formula 2, for example, $d2+e2+f2=1$. In the Formula 2, for example, $d2>e2+f2$.

In the Formula 2, M4 and M5 may each independently include Ni, Co, Fe, Ru, Rh or Pd. By including these metals, M4 and M5 may enable the solid ionic conductor, i.e., conducting oxide or perovskite oxide to provide electronic conductivity in addition to ionic conductivity, forming a mixed conductor.

In the Formula 2, the valence of M4 may be greater than the valence of M5. By having the valence of M4 greater than that of M5, the concentration of oxygen vacancies within the solid ion conductor may increase, resulting in enhanced oxygen ion conductivity.

The valence of M4 may be +3 or higher, +3.1 or higher, +3.2 or higher, +3.3 or higher, +3.4 or higher, or +3.5 or higher. The valence of M4 may be within the range of about +3 to about +4, about +3.1 to about +4, about +3.2 to about +4, about +3.3 to about +4, about +3.4 to about +4, or about +3.5 to about +4.

The valence of M5 may be less than +3, less than or equal to +2.9, less than or equal to +2.8, less than or equal to +2.7, less than or equal to +2.6, or less than or equal to +2.5. The valence of M5 may be about +2 to about less than +3, about +2 to about +2.9, about +2 to about +2.8, about +2 to about +2.7, about +2 to about +2.6 or about +2 to about +2.5.

In the Formula 2, M6 may include Zn, Mn, Yb, Ni, Cu, Ti, Ho or a combination thereof. By including M6, the thermal stability of the solid ion conductor may be further improved.

The valence of M6 may include +1, +2, +3, +4, +5, +6 or a combination thereof. The combination of the aforementioned multiple valences represents the average value of the multiple valences. The valence of M6 may be determined using XRD, XPS, or EDX.

The solid ion conductor includes a metal oxide, and the metal oxide may have a composition represented by Formula 3:

Formula 3 $La_{a3}Sr_{b3}Ba_{c3}Co_{d3}Fe_{e3}O_{3-\delta}$

wherein in the Formula 3,

$0.1 \le a3 \le 0.5$, $0.1 \le b3 \le 0.5$, $0.1 \le c3 \le 0.45$, $0.6 \le d3 \le 0.9$, $0.1 \le e3 \le 0.4$, $0 \le \delta < 1$ and $d3 > e3$, and
$\delta$ is an oxygen vacancy.

The structural stability of the solid ion conductor may be further improved by having the metal oxide having the composition of Formula 3.

In the Formula 3, for example, 0.1≤a3≤0.49, 0.1≤a3≤0.45, 0.1≤a3≤0.4, 0.1≤a3≤0.35 or 0.1≤a3≤0.3. In the Formula 3, for example, 0.1≤b3≤0.49, 0.1≤b3≤0.45, 0.1≤b3≤0.4, 0.1≤b3≤0.35 or 0.1≤b3≤0.3. In the Formula 3, for example, 0.1≤b3≤0.5, 0.1≤b3≤0.2, 0.1≤b3≤0.15, 0.1≤b3≤0.125. In the Formula 3, for example, 0.1≤c3≤0.44, 0.1≤c3≤0.42, 0.1≤c3≤0.4, 0.1≤c3≤0.35 or 0.1≤c3≤0.3. In the Formula 3, for example, 0.2≤c3≤0.45, 0.2≤c3≤0.4, 0.2≤c3≤0.375, 0.2≤c3≤0.3, 0.2≤c3≤0.25. In the Formula 3, for example, 0.6≤d3≤0.89, 0.6≤d3≤0.88, 0.6≤d3≤0.86, 0.6≤d3≤0.85 or 0.7≤d3≤0.8. In the Formula 3, for example, 0.6≤d3≤0.8, 0.6≤d3≤0.75. In the

Formula 3, for example, 0.1≤e3≤0.4, 0.15≤e3≤0.4, or 0.2≤e3≤0.4. In the Formula 3, for example, 0.125≤e3≤0.4, 0.125≤e3≤0.3, 0.2≤e3≤0.4, 0.2≤e3≤0.3, 0.2≤e3≤0.25.

In the Formula 3, for example, a3+b3+c3=1. In the Formula 3, for example, d3+e3=1.

The solid ion conductor may include a metal oxide, and the metal oxide may have a composition represented by Formulae 4A to 4G:

Formula 4A $La_{a4}Sr_{b4}Ba_{c4}Co_{d4}Fe_{e4}Zn_{f4}O_{3-\delta}$

Formula 4B $La_{a4}Sr_{b4}Ba_{c4}Co_{d4}Fe_{e4}Mn_{f4}O_{3-\delta}$

Formula 4C $La_{a4}Sr_{b4}Ba_{c4}Co_{d4}Fe_{e4}Yb_{f4}O_{3-\delta}$

Formula 4D $La_{a4}Sr_{b4}Ba_{c4}Co_{d4}Fe_{e4}Ni_{f4}O_{3-\delta}$

Formula 4E $La_{a4}Sr_{b4}Ba_{c4}Co_{d4}Fe_{e4}Cu_{f4}O_{3-\delta}$

Formula 4F $La_{a4}Sr_{b4}Ba_{c4}Co_{d4}Fe_{e4}Ti_{f4}O_{3-\delta}$

Formula 4G $La_{a4}Sr_{b4}Ba_{c4}Co_{d4}Fe_{e4}Ho_{f4}O_{3-\delta}$

wherein in the Formulae 4A to 4G,

$0.1 \le a4 \le 0.5$, $0.1 \le b4 \le 0.5$, $0.1 \le c4 \le 0.45$, $0.6 \le d4 \le 0.9$, $0.1 \le e4 \le 0.4$, $0.1 \le f4 \le 0.2$, $0 \le \delta < 1$, and $d4 > e4+f4$, and
$\delta$ is an oxygen vacancy.

By having a composition represented by Formulae 4A to 4G, the structural stability of the solid ion conductor may be further improved.

In the Formulae 4A to 4G, for example, 0.1≤a4≤0.49, 0.1≤a4≤0.45, 0.1≤a4≤0.4, 0.1≤a4≤0.35 or 0.1≤a4≤0.3. In the Formulae 4A to 4G, for example, 0.1≤b4≤0.49, 0.1≤b4≤0.45, 0.1≤b4≤0.4, 0.1≤b4≤0.35 or 0.1≤b4≤0.3. In the Formulae 4A to 4G, for example, 0.1≤b4≤0.5, 0.1≤b4≤0.2, 0.1≤b4≤0.15, 0.1≤b4≤0.125. In the Formulae 4A to 4G, for example, 0.1≤c4≤0.44, 0.1≤c4≤0.42, 0.1≤c4≤0.4, 0.1≤c4≤0.35 or 0.1≤c4≤0.3. In the Formula 4A to 4G, for example, 0.2≤c4≤0.45, 0.2≤c4≤0.4, 0.2≤c4≤0.375, 0.2≤c4≤0.3, 0.2≤c4≤0.25. In the Formulae 4A to 4G, for example, 0.6≤d4≤0.89, 0.6≤d4≤0.88, 0.6≤d4≤0.86, 0.6≤d4≤0.85 or 0.7≤d4≤0.8. In the Formula 4A to 4G, for example, 0.6≤d4≤0.8, 0.6≤d4≤0.75. In the Formulae 4A to 4G, for example, 0.1≤e4≤0.4, 0.15≤e4≤0.4, or 0.2≤e4≤0.4. In the Formula 4a to 4G, for example, 0.125≤e4≤0.4, 0.125≤e4≤0.3, 0.2≤e4≤0.4, 0.2≤e4≤0.3, 0.2≤e4≤0.25. In the Formulae 4A to 4G, for example, 0.1≤f4≤0.19, 0.1≤f4≤0.17, 0.1≤f4≤0.15 or 0.1≤f4≤0.13. In the Formula 4A to 4G, for example, 0.05≤f4≤0.2, 0.1≤f4≤0.2, 0.1≤f4≤0.0.15, 0.1≤f4≤0.125.

In the Formulae 4A to 4G, for example, a4+b4+c4=1. In the Formulae 4A to 4G, for example, d4+e4+f4=1.

The area-specific resistance (ASR) of the solid ion conductor, as measured at 700 °C using an alternating current impedance method, may be 0.5 ohms per square centimeter ($\Omega/cm^2$) or less, 0.3 $\Omega/cm^2$ or less, 0.1 $\Omega/cm^2$ or less, or 0.05 $\Omega/cm^2$ or less. The area-specific resistance may be the area-specific resistance for polarization resistance. The area-specific resistance may be measured using the alternating current impedance method in a symmetric cell containing the solid ion conductor.

The thermal expansion coefficient (TEC) of the solid ion conductor may be $20\times10^{-6}$ inverse kelvin (/K) or less, $17\times10^{-6}$ /K or less, or $15\times10^{-6}$ /K or less. By having such a thermal expansion coefficient, the solid ion conductor may suppress delamination caused by the difference in thermal expansion coefficients between the reaction barrier layer and/or the solid electrolyte layer and the air electrode in a solid oxide cell operating at high temperatures. As a result, the thermal stability of solid oxide cells may be improved.

The solid ion conductor may be formed of a metal oxide having the first to either fifth element or sixth element, or a combination thereof, which are described above. A solid ionic conductor may include a single crystalline phase. The solid ion conductor may be a single crystalline structure including a single crystalline phase, or a polycrystalline structure.

Alternatively, the solid ion conductor may, in addition to a metal oxide containing the first to either fifth element or sixth element, or a combination thereof, further include a composite of an ion-conductive metal oxide that is distinct from the metal oxide containing the first to either fifth element or sixth element, or a combination thereof together with the metal oxide containing the first to either fifth element or sixth element, or the combination thereof. Examples of the ion-conductive metal oxide distinct from the metal oxide containing the first to either fifth element or sixth element, or a combination thereof include neodymium-doped ceria (NDC), gadolinium-doped ceria (GDC), samarium-doped ceria (SDC), yttria-stabilized zirconia (YSZ), scandiastabilized zirconia (ScSZ, $ZrO_2/Sc_2O_3$), strontium- and magnesium-doped lanthanum gallate (LSGM), or a combination thereof, but is not limited to these.

The solid ion conductor may include a composite phase of the ion-conductive metal oxide distinct from the metal oxide containing the first to either fifth element or sixth element, or a combination thereof together with the metal oxide containing the first to either fifth element or sixth element, or the combination thereof. The solid ion conductor may include a composite phase including the cubic phase corresponding to the metal oxide containing the first to either fifth element or sixth element, or a combination thereof and the aforementioned composite. The solid ion conductor may include multiple crystalline phases. The solid ion conductor may be a polycrystalline structure that includes multiple crystalline phases.

According to another embodiment, a solid ion conductor may include a first metal oxide having a perovskite structure. The first metal oxide may include a first element, a second element, and a third element arranged in a cuboctahedral site of the perovskite structure, and include a fourth element and a fifth element arranged in an octahedral site of the perovskite structure, or a fourth element, a fifth element, and a sixth element arranged in an octahedral site of the perovskite structure. The first element may belong to Group 3 of the Periodic Table, the second element and the third element each may belong to Group 2 of the Periodic Table and have an atomic weight of 30 or more, the fourth element and the fifth element may each belong to Groups 8 to 11 of the Periodic Table, and the sixth element may belong to Groups 3, 4, or 7 to 12 of the Periodic Table. The formation energy of the first metal oxide may be about -0.8 eV to about -10 eV, compared to the formation energy of a second metal oxide formed by excluding the first element from the first metal oxide (for example, a second metal oxide formed by replacing the first element in the first metal oxide with the third element). Compared to the formation energy of a second metal oxide formed by excluding the first element from the first metal oxide, the formation energy of the first metal oxide may be about -0.8 eV to about -8 eV, about -0.8 eV to about - 6 eV, or about -0.8 eV to about -4 eV.

The first metal oxide may be a metal oxide represented by Formulae 1 to 3 or Formulae 4A to 4G. The second metal oxide may be a metal oxide in which the first element is excluded from the first metal oxide represented by Formulae 1 to 3 and Formulae 4A to 4G. The second metal oxide may be a metal oxide formed by excluding M1 of Formula 1 or La of Formulae 2 to 3 or Formulae 4A to 4G from the first metal oxide represented by Formulae 1 to Formula 3 or Formulae 4A to 4G.

The solid ion conductor including the first metal oxide may exhibit enhanced phase stability due to having a formation energy of -0.8 eV or less compared to the second metal oxide.

An electrode according to another embodiment includes the aforementioned solid ion conductor.

Electrodes containing solid ionic conductors may be used in electrochemical devices. Electrochemical devices may be metal oxide cells, metal-air batteries, gas sensors, capacitors, and the like. Electrodes containing the solid ion conductor may serve as a positive electrode, a negative electrode, a cathode, an anode, an air electrode, or a fuel electrode.

An electrode containing the solid ionic conductor may be air electrode.

FIG. 13 is a cross-sectional schematic diagram of an air electrode according to an embodiment.

Referring to FIG. 13, the air electrode 100 includes an air electrode current collector 110 and a catalyst layer 120 disposed on the air electrode current collector 110. The catalyst layer 120 may include a solid ion conductor.

The air electrode current collector 110 may be a porous conductor including a plurality of pores. The air electrode current collector 110 may include a metal mesh, a metal foam, a metal powder assembly, a porous carbon structure, or a combination thereof. The metal mesh, metal foam or metal powder assembly may include stainless steel, nickel (Ni), cobalt (Co), manganese (Mn), aluminum (Al), indium (In), copper (Cu), magnesium (Mg), titanium (Ti), iron (Fe), zinc (Zn), germanium (Ge), silver (Ag), gold (Au), platinum (Pt) or alloys thereof. The metal mesh or metal foam may include a stainless steel skeleton and a coating layer disposed on a surface of the skeleton, wherein the coating layer may include nickel (Ni), cobalt (Co), manganese (Mn), aluminum (Al), indium (In), copper (Cu), magnesium (Mg), titanium (Ti), iron (Fe), zinc (Zn), germanium (Ge), silver (Ag), gold (Au), platinum (Pt) or an alloy of each of these.

The air electrode catalyst layer 120 may include a solid ion conductor including the first to either fifth element or sixth element, or a combination thereof described above as a catalyst. The air electrode catalyst layer 120 may be formed by preparing an air electrode catalyst layer slurry containing a solid ion conductor and a solvent, coating it on a substrate, and sintering it. The substrate may be an air electrode current collector 110 or a solid electrolyte layer (not shown). Since the solid ion conductor is a mixed conductor having excellent ion conductivity and electron conductivity, it may act as a catalyst for oxygen reduction reaction and/or oxygen evolution reaction at the air electrode. Since the solid ion conductor has improved structural stability, deterioration of the air electrode catalyst layer 120 may be suppressed even after long-term operation. The durability of the air electrode 100 may be improved.

The air electrode catalyst layer 120 may further include a binder or a conductive material.

Examples of the binder include vinylidene fluoride/hexafluoropropylene copolymer (PVDF-HFP), polyvinylidene fluoride (PVDF), polyacrylonitrile (PAN), polymethyl methacrylate (PMMA), polytetrafluoroethylene (PTFE), polyacrylic acid (PAA), polyvinyl alcohol (PVA), carboxymethyl cellulose (CMC), starch, hydroxypropyl cellulose, regenerated cellulose, polyvinylpyrrolidone, polyethylene, polypropylene, ethylene-propylene-diene monomer (EPDM), sulfonated EPDM, styrene-butadiene-rubber, fluorinated rubber, copolymers thereof, or a combination thereof. The content of the binder may be about 1 part by weight to about 10 parts by weight, or about 2 parts by weight to about 7 parts by weight, per 100 parts by weight of the solid ion conductor. The binder may be partially or completely removed by vaporization and/or carbonization during the sintering process of the air electrode catalyst layer 120. The binder may be omitted.

The conductive material may include a carbon-based, i.e., carbon-containing conductive material. Examples of the carbon-based conductive material include carbon black, carbon fibers, graphite, fluorocarbon, or a combination thereof. Examples of carbon black include acetylene black, Ketjen black, Super P carbon, channel black, furnace black, lamp black, thermal black or a combination thereof. Graphite may be natural or artificial graphite. The air electrode catalyst layer 120 may further include a metal-based conductive material, a metal oxide-based conductive material, or a polymer-based conductive material in addition to the carbon-based conductive material described above. Examples of the foregoing materials include a metal fiber, a metal powder such as aluminum powder or nickel powder, a conductive metal oxide such as zinc oxide or potassium titanate, or a polyethylene derivative. The content of the conductive material may be about 1 part by weight to about 10 parts by weight, or about 2 parts by weight to about 7 parts by weight, per 100 parts by weight of the solid ion conductor. The conductive material may be omitted.

The air electrode catalyst slurry may include a solvent. The solvent may include terpineol, but is not limited to these.

In the air electrode 100, depending on the operating mode, the oxygen reduction reaction (ORR) represented by Reaction Scheme 1, the oxygen evolution reaction (OER) represented by Reaction Scheme 2, or both reactions may occur.

Reaction Scheme 1 $$1/2O_2 + H_2O + 2e- \rightarrow 2OH^-$$

Reaction Scheme 2 $$2OH^- \rightarrow 1/2O_2 + H_2O + 2e^-$$

In the fuel cell mode of a solid oxide cell, an oxygen reduction reaction may be performed at the air electrode. In the electrolysis cell mode of a solid oxide cell, an oxygen evolution reaction may be performed at the air electrode. At the air electrode of a metal-air cell, an oxygen evolution reaction occurs during charging, while an oxygen reduction reaction occurs during discharging.

According to an embodiment, a solid oxide cell may include an air electrode, a fuel electrode, and a solid electrolyte layer disposed between the air electrode and the fuel electrode. One or more of the air electrode, the fuel electrode, and the solid electrolyte layer may include the solid ion conductor including the first to either fifth element or sixth element, or a combination thereof described above.

Examples of the solid oxide cell include a solid oxide fuel cell or a solid oxide electrolyzer cell.

FIGS. 14 and 15 are schematic diagrams showing a solid oxide cell 1000 according to an embodiment.

The solid oxide cell may operate in both fuel cell mode, where oxygen reduction reactions occur, and electrolysis cell mode, where oxygen evolution reactions occur. For example, depending on the required conditions, the cell may generate electricity in fuel cell mode or produce fuel in electrolysis cell mode.

Referring to FIGS. 14 and 15, the solid oxide cell may include an air electrode 100, a fuel electrode 200, and a solid electrolyte layer 300 disposed between the air electrode 100 and the fuel electrode 200.

The air electrode 100 may perform oxygen reduction reactions and/or oxygen evolution reactions. The air electrode 100 may include an air electrode current collector 110 and an air electrode catalyst layer 120.

Detailed descriptions of the air electrode current collector 110 and the air electrode catalyst layer 120 are provided in the earlier sections describing the electrode.

The air electrode catalyst layer 120 may additionally include a solid ion conductor that is distinct from the solid ion conductor including the first to either fifth element or sixth element, or a combination thereof described above. The solid ion conductor added to the air electrode catalyst layer 120 may be selected from among the solid ion conductors used in the solid electrolyte layer 300 described below.

The solid electrolyte layer 300 may be a solid oxide electrolyte layer. The solid electrolyte layer 300 may include a solid ion conductor, and the solid ion conductor may include an oxygen ion conductor, a proton conductor, or a combination thereof. The solid electrolyte layer 300 may include a solid ion conductor including the first to either fifth element or sixth element, or a combination thereof described above as an oxygen ion conductor.

The solid electrolyte layer 300 may include an oxygen ion conductive metal oxide as an oxygen ion conductor. Examples of the oxygen ion conducting metal oxide include rare-earth-doped ceria (RDC) such as neodymium-doped ceria (NDC), gadolinium-doped ceria (GDC), samarium-doped ceria (SDC); yttria stabilized zirconia (YSZ, $ZrO_2/Y_2O_3$); scandia stabilized zirconia (ScSZ, $ZrO_2/Sc_2O_3$); strontium-and magnesium-doped lanthanum gallate (LSGM) or a combination thereof. A solid oxide cell employing a solid electrolyte layer 300 including an oxygen ion conductor may be an oxygen ion conductive solid oxide cell.

The solid electrolyte layer 300 may include a proton-conducting metal oxide as a proton conductor. Examples of the proton-conducting metal oxide include at least one of trivalent element-doped barium zirconate ($BaZrO_3$), barium cerate ($BaCeO_3$), barium zirconate cerate ($BaZr_{1-x}Ce_xO_3$, where $0.05 \leq x \leq 0.95$), strontium cerate ($SrCeO_3$), strontium zirconate ($SrZrO_3$), or strontium zirconate cerate ($SrZr_{1-x}Ce_xO_3$, where $0.05 \leq x \leq 0.95$). The trivalent element doped in the proton conductor may include yttrium (Y), a lanthanide, or a combination thereof. Lanthanide element may include ytterbium (Yb). Examples of the proton conductor include yttrium (Y)-doped barium zirconate, yttrium (Y) and ytterbium (Yb)-doped barium zirconate cerate, or a combination thereof. Examples of proton conductors include $BaZr_{1-x}Y_xO_{3-\delta}$ (where $0.1 \leq x \leq 0.2$, $2 \leq \delta < 3$), $BaZr_{0.1}Ce_{0.7}Y_{0.1}Yb_{0.1}O_{2.95}$. A solid oxide cell employing a solid electrolyte layer 300 with a proton conductor may include a proton-conductive solid oxide cell.

A solid oxide cell employing a solid electrolyte layer 300 containing a mixture of oxygen ion conductors and proton conductors may include a mixed-conductive solid oxide cell.

The fuel electrode 200 may provide fuel diffusion and electron conduction. Examples of the fuel may include hydrogen, water (gas) or carbon dioxide. The fuel electrode 200 may include a fuel electrode current collector 210 and a fuel electrode catalyst layer 220 disposed on the fuel electrode current collector 210. The fuel electrode current collector 210 may be selected from a metal mesh, metal foam, metal powder assembly, or porous carbon structure, used in the air electrode current collector 110. The material of the fuel electrode current collector 220 may be selected from the materials used for the air electrode current collector 110.

The fuel electrode catalyst layer 220 may include the solid ion conductor containing the first to either fifth element or sixth element, or a combination thereof.

The fuel electrode catalyst layer 220 may also include a solid ion conductor distinct from the aforementioned solid ion conductor containing the first to either fifth element or sixth element, or a combination thereof. Examples of the solid ion conductor include an oxygen ion conductor, a proton conductor, or a combination thereof. The oxygen ion conductor, proton conductor or a combination thereof added to the fuel electrode catalyst layer 220 may be selected from the oxygen ion conductor, proton conductor or a combination thereof used in the solid electrolyte layer 300.

The fuel electrode catalyst layer 220 may further include a catalytic metal.

The catalytic metal may enhance the electronic conductivity of the fuel electrode catalyst layer 220 and facilitate the generation of protons and electrons from the fuel or the production of fuel from protons and electrons. Examples of the catalytic metal include a transition metal. Examples of the catalytic metal include Ni, Cu, Pt, Pd, or a combination thereof.

The fuel electrode catalyst layer 220 may further include a carbonaceous material.

The fuel electrode catalyst layer 220 may be prepared by mixing catalytic metal oxides, a solid ion conductor, and optionally a precursor of carbonaceous material, followed by sintering. The catalytic metal oxide may be reduced to a catalytic metal by hydrogen supplied before the operation of the solid oxide cell, and it may be present in the reduced state within the fuel electrode catalyst layer 220.

The solid oxide cell 1000 may operate at about 500 °C to about 1100 °C. At such operating temperatures, the solid electrolyte layer 300 may provide sufficiently high oxygen ion conductivity and/or proton conductivity.

Referring to FIG. 15, the solid oxide cell 1000 may further include a reaction barrier layer 400, 400a, 400b between the solid electrolyte layer 300 and the air electrode 100 and/or between the solid electrolyte layer 300 and the fuel electrode 200.

The reaction barrier layer 400, 400a, 400b may prevent side reactions between the solid electrolyte layer 300 and the air electrode 100 and/or the fuel electrode 200, thereby improving the durability of the solid oxide cell 1000.

The reaction barrier layer 400, 400a, 400b may include a solid ion conductor. The solid ion conductor used in the reaction barrier layer 400, 400a, 400b may be selected from an oxygen ion conductor, a proton conductor, or a combination thereof, used in the solid electrolyte layer 300. The solid ion conductor used in the reaction barrier layer 400, 400a, 400b may have a composition distinct from the solid ion conductor used in the solid electrolyte layer 300. Therefore, the reaction barrier layer 400, 400a, 400b may suppress side reactions between the solid ion conductor of the solid electrolyte layer 300 and the air electrode 100, thereby enhancing the durability of the solid oxide cell 1000.

The solid oxide cell 1000 may operate in fuel cell mode, where fuel is supplied to the fuel electrode 200 and air is supplied to the air electrode 100 to produce electricity.

The solid oxide cell 1000 may operate in electrolysis cell mode, where an electric field is applied between the fuel electrode 200 and the air electrode 100 to produce fuel at the fuel electrode 200. The electrolysis cell mode may be referred to as a hydrogen production mode or alternatively as a water-splitting mode.

Oxygen ion-conductive solid oxide cells may operate in dual mode, i.e., fuel cell mode and electrolysis cell mode, through the following reaction.

Fuel cell mode

Fuel electrode: $H_2 + O^{2-} \rightarrow H_2O + 2^{e-}$

Air electrode: $1/2O_2 + 2e^- \rightarrow O^{2-}$

(Oxygen reduction reaction, ORR)
Electrolysis cell mode

Fuel electrode: $H_2O + 2e^- \rightarrow H_2 + O^{2-}$

Air electrode: $O^{2-} \rightarrow 1/2O_2 + 2e^-$

(Oxygen evolution reaction, OER)
Proton-conductive solid oxide cells may operate in dual mode, i.e., fuel cell mode and electrolysis cell mode, through the following reaction.
Fuel cell mode

Fuel electrode: $H_2 \rightarrow 2H^+ + 2e^-$

Air electrode: $2H^+ + 1/2O_2 + 2e^- \rightarrow H_2O$

Electrolysis cell mode

Fuel electrode: $2H+ + 2e^- \rightarrow H_2$

Air electrode: $H_2O \rightarrow 2H^+ + 1/2O_2 + 2e^-$

(Oxygen evolution reaction, OER)

FIG. 16 is a schematic diagram of a solid oxide cell stack 1000 according to an embodiment.

Referring to FIG. 16, a solid oxide cell stack 1000 may include a plurality of solid oxide cells 1000, 1001 stacked in the thickness direction. Each solid oxide cell 1000, 1001 may include an air electrode 100, a fuel electrode 200, and a solid electrolyte layer 300 therebetween. A plurality of solid oxide cells 1000, 1001 are stacked in the thickness direction, and an interconnector 500 is arranged between adjacent solid oxide batteries 1000, 1001. The interconnector 500 may include an air passage 600 arranged adjacent to the air electrode 100 and a fuel passage 700 arranged adjacent to the fuel electrode 200. Through the air passage 600, fluid such as air or oxygen may be supplied to the air electrode 100, or fluid such as oxygen may be discharged. Through the fuel passage 700, fuel fluids such as hydrogen, water and carbon dioxide may be supplied to the fuel electrode 200, or fluids such as hydrogen and carbon monoxide may be discharged.

The interconnector 500 may be an electrical conductor. The interconnector 500 may contain metal. The interconnector 500 may exhibit oxidation resistance against the fluids supplied to the air electrode 100 and the fuel electrode 200 at the operating temperature of the solid oxide cell 1000. The interconnector 500 may also have a thermal expansion coefficient (TEC) that is similar to or identical to the TEC of the ceramic components included in the solid electrolyte layer 300 of the solid oxide cell 1000, 1001. For example, ferritic alloy steel that forms a chromium oxide surface layer may be used as the interconnector 500.

Hereinafter, the disclosure will be described in detail with reference to examples and comparative examples, but is not limited to the following examples.

Manufacture of solid ion conductors

Example 1: $Ba_{0.45}La_{0.45}Sr_{0.1}Co_{0.6}Fe_{0.4}O_{3-\delta1}$

Manufacture of solid ion conductor powder

As the precursor for the first element, $La(NO_3)_3 \cdot 6H_2O$, as the precursor for the second element, $Sr(NO_3)_2$, as the precursor for the third element, $Ba(NO_3)_2$, as the precursor for the fourth element, $Co(NO_3)_2 \cdot 6H_2O$, and as the precursor for the fifth element, $Fe(NO_3)_3 \cdot 9H_2O$ were mixed in stoichiometric proportions to prepare a mixture. The prepared mixture was mixed with citric acid in a weight ratio of 1:1, then introduced into distilled water and stirred to prepare a precursor solution.

The precursor solution was evaporated in an oven at 350 °C to prepare a gelation powder. The gelation powder was calcined in a furnace at 1000 °C for 4 hours to manufacture a solid ion conductor in powder form with the composition disclosed in Table 1. The composition of the manufactured solid ion conductor was $Ba_{0.45}La_{0.45}Sr_{0.1}Co_{0.6}Fe_{0.4}O_{3-\delta1}$ ($0<\delta1<0.7$).

Manufacture of electrodes and solid oxide cells

YSZ powder was placed in a pelletizer, pressed using uniaxial pressure, and sintered in an air atmosphere at 1450 °C for 5 hours to prepare YSZ pellets with a thickness of 0.5 millimeter (mm).

GDC ($Ce_{0.9}Gd_{0}$.1O2, BET: 11.8 $m^2/g$, FCM, USA) paste was coated on both sides of the YSZ pellet using a screen-printing method and sintered in an air atmosphere at 1200 °C for 2 hours to prepare a first laminate with a reaction barrier layer (GDC layer)/solid electrolyte layer (YSZ layer)/reaction barrier layer (GDC layer) structure.

The solid ion conductor powder was ball-milled to prepare milled solid ion conductor powder. The milled solid ion conductor powder was mixed with an ink vehicle solution (FCM) in a weight ratio of 2:1 to prepare a solid ion conductor paste. The solid ion conductor paste was coated on the reaction barrier layer of the first laminate using a screen-printing method and sintered in an air atmosphere at 900 °C for 2 hours to prepare a second laminate. The second laminate had an air electrode/reaction barrier layer (GDC layer)/solid electrolyte layer (YSZ layer)/reaction barrier layer (GDC layer)/air electrode structure. Ag paste (H4580, Shoei Chemical, Japan) was coated on both air electrode surfaces of the second laminate, and Ag mesh and wires were connected to fabricate a solid oxide cell.

Example 2: $Ba_{0.45}La_{0.05}Sr_{0.5}Co_{0.6}Fe_{0.4}O_{3-\delta2}$

Except for modifying the stoichiometric ratios of the precursors, a solid ion conductor, an air electrode, and a solid oxide cell were each manufactured using the same method as in Example 1.

The composition of the manufactured solid ion conductor was $Ba_{0.45}La_{0.05}Sr_{0.5}Co_{0.6}Fe_{0.4}O_{3-\delta2}$ ($0<\delta2<0.7$).

Example 3: $Ba_{0.2}La_{0.3}Sr_{0.5}Co_{0.6}Fe_{0.4}O_{3-\delta3}$

Except for modifying the stoichiometric ratios of the precursors, a solid ion conductor, an air electrode, and a solid oxide cell were each manufactured using the same method as in Example 1.

The composition of the manufactured solid ion conductor was $Ba_{0.2}La_{0.3}Sr_{0.5}Co_{0.6}Fe_{0.4}O_{3-\delta3}$ ($0<\delta3<0.7$).

Example 4: $Ba_{0.2}La_{0.3}Sr_{0.5}Co_{0.6}Fe_{0.3}Zn_{0.1}O_{3-\delta4}$

Except for adding $Zn(NO_3)_2 \cdot 6H_2O$ as the precursor for the sixth element and modifying the stoichiometric ratios of the precursors, a solid ion conductor, an air electrode, and a solid oxide cell were each manufactured using the same method as in Example 1.

The composition of the manufactured solid ion conductor was $Ba_{0.2}La_{0.3}Sr_{0.5}Co_{0.6}Fe_{0.3}Zn_{0.1}O_{3-\delta4}$ ($0<\delta4<0.7$).

Example 5: $Ba_{0.2}La_{0.3}Sr_{0.5}Co_{0.6}Fe_{0.2}ZN_{0.2}O_{3-\delta5}$

Except for adding $Zn(NO_3)_2 \cdot 6H_2O$ as the precursor for the sixth element and modifying the stoichiometric ratios of the precursors, a solid ion conductor, an air electrode, and a solid oxide cell were manufactured using the same method as in Example 1.

The composition of the manufactured solid ion conductor was $Ba_{0.2}La_{0.3}Sr_{0.5}Co_{0.6}Fe_{0.2}Zn_{0.2}O_{3-\delta5}$ ($0<\delta5<0.7$).

Comparative Example 1: $La_{0.6}Sr_{0.4}CoO_{3-\delta6}$

Except for preparing a mixture using $La(NO_3)_3 \cdot 6H_2O$ as the precursor for the first element, $Sr(NO_3)_2$ as the precursor for the second element, and $Co(NO_3)_2 \cdot 6H_2O$ as the precursor for the fourth element in stoichiometric ratios, a solid ion conductor, an air electrode, and a solid oxide cell were each manufactured using the same method as in Example 1.

The composition of the manufactured solid ion conductor was $La_{0.6}Sr_{0.4}CoO_{3-\delta6}$ ($0<\delta6<0.7$).

The compositions of the solid ion conductors manufactured in Examples 1 to 5 and Comparative Example 1 are summarized in Table 1 below. In Table 1, $0<\delta1<0.7$, $0<\delta2<0.7$, $0<\delta3<0.7$, $0<\delta4<0.7$, $0<\delta5<0.7$ and $0<\delta6<0.7$.

Table 1

| | Composition |
|---|---|
| Example 1 | $Ba_{0.45}La_{0.45}Sr_{0.1}Co_{0.6}Fe_{0.4}O_{3-\delta1}$ |
| Example 2 | $Ba_{0.45}La_{0.05}Sr_{0.5}Co_{0.6}Fe_{0.4}O_{3-\delta2}$ |
| Example 3 | $Ba_{0.2}La_{0.3}Sr_{0.5}Co_{0.6}Fe_{0.4}O_{3-\delta3}$ |
| Example 4 | $Ba_{0.2}La_{0.3}Sr_{0.5}Co_{0.6}Fe_{0.3}Zn_{0.1}O_{3-\delta4}$ |
| Example 5 | $Ba_{0.2}La_{0.3}Sr_{0.5}Co_{0.6}Fe_{0.2}Zn_{0.2}O_{3-\delta5}$ |
| Comparative Example 1 | $La_{0.6}Sr_{0.4}CoO_{3-\delta6}$ |

Evaluation Example 1: X-ray diffraction analysis

The XRD spectrum of the solid ion conductors prepared in Examples 1 to 5 and Comparative Example 1 was measured, and parts of the results are shown in FIGS. 1 to 4.

The XRD spectrum was measured using X'pert Pro (PANalytical) with Cu $K\alpha$ radiation (1.54056 Å).

As shown in FIGS. 1 to 4, the solid ion conductors prepared in Examples 1 and 3 to 5 exhibited characteristic peaks corresponding to a perovskite structure, confirming that they have the same crystal structure.

As shown in Fig. 4, it was confirmed that the solid ion conductor prepared in Example 5 exhibited additional peaks, indicating the formation of a secondary phase.

It was confirmed that the crystal structure remained unchanged despite compositional variations in the solid ion conductors prepared in Examples 1 and 3 to 5.

The solid ion conductors prepared in Examples 1 and 3 to 5 were confirmed to have a perovskite structure that includes a cubic phase. No tetragonal phase was detected.

Referring to FIG. 5, in the perovskite solid ion conductors of Examples 1 to 5 and Comparative Example 1, Ba, La, and/or Sr are positioned in the 12-coordination cuboctahedral site, while Co, Fe, and/or Zn are positioned in the 6-coordination octahedral site.

Evaluation Example 2: Phase stability evaluation

The phase stability was evaluated by calculating the formation energy of perovskite solid ion conductors with the compositions of Examples 6 to 9 and Comparative Examples 2 to 5 relative to perovskite solid ion conductors with the composition of Reference Example 1. The calculation results are shown in Table 2.

The formation energy calculation was performed using quantum calculations. The quantum calculations were conducted using density functional theory (DFT).

Table 2

| | Composition | Formation energy [eV] |
|---|---|---|
| Reference Example 1 | $Ba_{0.5}Sr_{0.5}Co_{0.75}Fe_{0.25}O_{2.375}$ | - |
| Example 6 | $Ba_{0.25}La_{0.25}Sr_{0.5}Co_{0.75}Fe_{0.25}O_2.6$ | -0.97618 |
| Example 7 | $Ba_{0.375}La_{0.5}Sr_{0.125}Co_{0.75}Fe_{0.25}O_{2.625}$ | -1.67939 |

(continued)

| | Composition | Formation energy [eV] |
|---|---|---|
| Example 8 | $Ba_{0.375}La_{0.125}Sr_{0.5}Co_{0.75}Fe_{0.25}O_{2.375}$ | -1.25000 |
| Example 9 | $Ba_{0.25}La_{0.25}Sr_{0.5}Co_{0.75}Fe_{0.125}Zn_{0.125}O_{2.6}$ | -3.30419 |
| Comparative Example 2 | $Ba_{0.125}La_{0.125}Sr_{0.75}Co_{0.75}Fe_{0.25}O_{2.375}$ | -0.57493 |
| Comparative Example 3 | $Ba_{0.25}La_{0.125}Sr_{0.625}Co_{0.75}Fe_{0.25}O_{2.375}$ | -0.54519 |
| Comparative Example 4 | $Ba_{0.75}La_{0.125}Sr_{0.125}Co_{0.75}Fe_{0.25}O_{2.375}$ | -0.36661 |
| Comparative Example 5 | $Ba_{0.625}La_{0.125}Sr_{0.25}Co_{0.75}Fe_{0.25}O_{2.375}$ | -0.39151 |

As shown in Table 2, the solid ion conductors of Examples 6 to 9 exhibited a formation energy reduction of -0.9 eV or greater compared to the solid ion conductor of Reference Example 1.

The solid ion conductors of Comparative Examples 2 to 4 exhibited a formation energy reduction of less than -0.9 eV compared to the solid ion conductor of Reference Example 1.

It was confirmed that the solid ion conductors of Examples 6 to 9, which satisfy the compositional range of this disclosure, exhibited improved phase stability compared to the solid ion conductors of Comparative Examples 2 to 5, which fall outside the compositional range of this disclosure.

It was also confirmed that the electrodes and solid oxide cells containing the solid ion conductors of Examples 6 to 9 demonstrated enhanced structural stability.

Evaluation Example 3: Impedance and Durability Measurement

For the solid oxide cells fabricated in Examples 1 to 4 and Comparative Example 1, impedance was measured both before and after applying a constant current at a current density of 1.0 ampere per square centimeters ($A/cm^2$) for 120 hours or 160 hours at 700 °C. Impedance was measured using an impedance analyzer (Solartron 1400 ampere (A)/1455A) with a two-probe method. The frequency range was 0.1 Hertz (Hz) to 1 megaHertz (MHz), and the amplitude voltage was 10 millivolts (mV). Nyquist plots for the impedance measurement results are shown in FIGS. 6A to 6C, 7A to 7C, 8Aa to 8C, 9A to 9C, and 10A to 10C.

From the Nyquist plots shown in FIGS. 6A to 6C, 7A to 7C, 8A to 8C, 9A to 9C, and 10A to 10C, the ohmic resistance ($R_{ohm}$) and polarization resistance ($R_{pol}$) of the symmetric cell solid oxide cells containing the solid ion conductors of Examples 1 to 4 and Comparative Example 1 were measured.

FIGS. 6A, 7A, 8A, 9A, and 10A show the Nyquist plots of symmetric cells containing the solid ion conductors of Examples 1 to 4 and Comparative Example 1 before and after applying a constant current at a current density of 1.0 $A/cm^2$ for 120 hours or 160 hours at 700 °C. In FIGs. 6A, 7A, 8A, 9A, and 10A, the left-side shows the Nyquist plots of the solid oxide cells before current application, and the right-side shows the Nyquist plots of the solid oxide cells after current application under the same conditions.

FIGs. 6B, 7B, 8B, 9B, and 10B are enlarged views of the left-side Nyquist plots in FIGs. 6A, 7A, 8A, 9A, and 10A, respectively.

FIGs. 6C, 7C, 8C, 9C, and 10C are enlarged views of the right-side Nyquist plots in FIGs. 6A, 7A, 8A, 9A, and 10A, respectively.

FIGS. 6D, 7D, 8D, 9D, and 10D show graphs of the voltage changes over time during the application of constant current for 120 hours or 160 hours and in air condition for the symmetric cells containing the solid ion conductors of Examples 1 to 4 and Comparative Example 1. During constant current application, oxygen reduction reaction (ORR) and oxygen evolution reaction (OER) occurred in the pair of air electrodes.

As shown in FIGs. 6A to 6C, 7A to 7C, 8A to 8C, and 9A to 9C, the ohmic resistance ($R_{ohm}$) before current application in the symmetric cells containing the solid ion conductors of Examples 1 to 4 was 4.7 ohm-square centimeters ($\Omega\cdot cm^2$) or less. As shown in FIGs. 10A to 10C, the ohmic resistance ($R_{ohm}$) before current application in the symmetric cells containing the solid ion conductor of Comparative Example 1 was 4.8 $\Omega/cm^2$ or greater. It was confirmed that the air electrodes containing the solid ion conductors of Examples 1 to 4 had reduced contact resistance with the solid electrolyte layer and/or reaction barrier layer compared to the air electrodes containing the solid ion conductor of Comparative Example 1, even before the operation of the solid oxide cells.

As shown in FIGs. 6A to 6C, 7A to 7C, 8A to 8C, and 9A to 9C, the increase in ohmic resistance ($R_{ohm}$) before and after current application in the symmetric cells containing the solid ion conductors of Examples 1 to 4 was 0.50 $\Omega\cdot cm^2$ or less. As shown in FIGs. 10A to 10C, the increase in ohmic resistance ($R_{ohm}$) before and after current application in the symmetric cells containing the solid ion conductor of Comparative Example 1 was 0.65 $\Omega/cm^2$ or greater. It was confirmed that the air electrodes containing the solid ion conductors of Examples 1 to 4 more effectively suppressed the formation of insulating phases during the operation of the solid oxide cells compared to the air electrodes containing the solid ion conductor of Comparative Example 1.

As shown in FIGs. 6A to 6C, the polarization resistance ($R_{pol}$) before and after current application in the symmetric cells containing the solid ion conductor of Example 1 showed almost no change and was approximately 0.04 $\Omega \cdot cm^2$. As shown in FIGs. 10A to 10C, the polarization resistance ($R_{pol}$) before and after current application in the symmetric cells containing the solid ion conductor of Comparative Example 1 showed almost no change and was approximately 0.08 $\Omega \cdot cm^2$. It was confirmed that the symmetric cells containing the solid ion conductor of Example 1 had 50 % reduced polarization resistance, i.e., an interfacial resistance, compared to the symmetric cells containing the solid ion conductor of Comparative Example 1, thereby improving the reversibility of electrode reactions at the interface.

As shown in FIGs. 6D, 7D, 8D, and 9D, the voltage of the symmetric cells containing the solid ion conductors of Examples 1 to 4 remained stable during the application of constant current for 120 hours or 160 hours. In contrast, as shown in FIG. 10D, the voltage of the symmetric cell containing the solid ion conductor of Comparative Example 1 changed rapidly after 100 hours of constant current application. It was confirmed that the solid oxide cells containing the solid ion conductors of Examples 1 to 4 exhibited improved structural stability and lifespan characteristics compared to the solid oxide cell containing the solid ion conductor of Comparative Example 1. It was confirmed that the solid oxide cells containing the solid ion conductors of Examples 1 to 4 exhibited improved structural stability and lifespan characteristics.

From the Nyquist plots in FIGS. 6A to 6C, 7A to 7C, 8A to 8C, and 9A to 9C, and 10A to 10C, the area-specific resistance (ASR) was calculated based on the polarization resistance ($R_{pol}$) and air electrode area for the solid ion conductors of Examples 1 to 4 and Comparative Example 1. The area specific resistance (ASR) was calculated from the following Equation 1. Since the symmetric cell contains two air electrodes, the air electrode area was divided by two.

$$\text{Area specific resistance (ASR)} = [\text{polarization resistance } (R_{pol}) \times \text{air electrode area} / 2] \qquad \text{Equation 1}$$

The air electrodes containing the solid ion conductors of Examples 1 to 4 exhibited ASRs of 0.5 $\Omega \cdot cm^2$ or less. In contrast, conventional air electrodes containing traditional solid ion conductors typically exhibit ASRs of 1.0 $\Omega \cdot cm^2$ or more. It was confirmed that the solid ion conductors of Examples 1 to 4 provided reduced interfacial resistance compared to conventional solid ion conductors. Polarization resistance, or interfacial resistance, corresponds to processes such as the migration of oxygen ions, oxygen exchange reactions, oxygen reduction reactions, and gas diffusion reactions in the air electrode.

Evaluation Example 4: Scanning Electron Microscope Analysis

For the solid oxide cells manufactured in Example 1 and Comparative Example 1, cross-sectional SEM images of the solid oxide cells were obtained after applying a constant current at a current density of 1.0 A/$cm^2$ for 120 hours at 700 °C. The results are shown in FIGs. 11 and 12, respectively.

As shown in FIG. 11, the solid oxide cell manufactured in Example 1 did not exhibit delamination between the reaction barrier layer (GDC layer) and the air electrode even after 120 hours of operation. In contrast, as shown in FIG. 12, the solid oxide cell manufactured in Comparative Example 1 exhibited delamination between the reaction barrier layer (GDC layer) and the air electrode after 120 hours of operation. It was confirmed that solid oxide cells employing air electrodes containing the solid ion conductors of Examples 1 to 4 can suppress delamination between the reaction barrier layer and the air electrode more effectively than those employing air electrodes containing the solid ion conductor of Comparative Example 1. This suppression is attributed to the mitigation of local oxygen partial pressure ($pO_2$) increases due to the high ionic conductivity of the air electrodes. It was further confirmed that the structural stability of solid oxide cells employing air electrodes containing the solid ion conductors of Examples 1 to 4 is improved.

Although the disclosure has been described with reference to specific embodiments, it is not limited thereto. Various modifications may be made within the scope of the claims, detailed description of the invention, and accompanying drawings. Such modifications are also considered to fall within the scope of the invention.

According to an aspect of the disclosure, a novel solid ion conductor has improved structural stability.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

## Claims

**1.** A solid ion conductor comprising a metal oxide having a perovskite structure,

wherein the metal oxide comprises a first element, a second element and a third element, each arranged in a cuboctahedral site of the perovskite structure,
and comprises a fourth element and a fifth element, each arranged in an octahedral site of the perovskite structure, or a fourth element, a fifth element and a sixth element, each arranged in an octahedral site of the perovskite structure,
wherein the first element belongs to Group 3 of the Periodic Table,
the second and third elements each belong to Group 2 of the Periodic Table and have an atomic weight of 30 or more,
the fourth and fifth elements each belong to one of Groups 8 to 11 of the Periodic Table,
the sixth element belongs to one of Groups 3, 4, or 7 to 12 of the Periodic Table, and
wherein a content of each of the first element, the second element, and the third element is 0.5 or less relative to the total content of the first, second, and third elements.

**2.** The solid ion conductor of claim 1,

wherein a sum of the contents of the first element and the second element is greater than the content of the third element,
a sum of the contents of the second element and the third element is equal to or greater than the content of the first element, or
a sum of the contents of the first element and the third element is equal to or greater than the content of the second element.

**3.** The solid ion conductor of claims 1 or 2,

wherein the metal oxide comprises at least one of a cubic phase or a hexagonal phase,
wherein a phase fraction of the cubic phase is 95 weight percent or more relative to the total of the cubic phase and the hexagonal phase, a phase fraction of the hexagonal phase is 5 weight percent or less relative to the total of the cubic phase and the hexagonal phase, and
the metal oxide is free of a tetragonal phase.

**4.** The solid ion conductor of any of claims 1-3, wherein the metal oxide is represented by Formula 1:

Formula 1 $$M1_{a1}M2_{b1}M3_{c1}M4_{d1}M5_{e1}M6_{f1}O_{3-\delta}$$

wherein in Formula 1,

$0.01 \leq a1 \leq 0.5$, $0.01 \leq b1 \leq 0.5$, $0.01 \leq c1 \leq 0.5$, $0.1 \leq d1 \leq 0.9$, $0.1 \leq e1 \leq 0.9$, $0 \leq f1 < 0.2$, and $0 \leq \delta < 1$,
M1 is an element belonging to Group 3 of the Periodic Table,
M2 and M3 are each independently an element belonging to Group 2 of the Periodic Table and having an atomic weight of 30 or more,
M4 and M5 are each independently an element belonging to one of Groups 8 to 11 of the Periodic Table,
M6 is an element belonging to one of Groups 3, 4, or 7 to 12 of the Periodic Table, and
$\delta$ represents an oxygen vacancy.

**5.** The solid ion conductor of any of claims 1-4, wherein M1 comprises a lanthanide element, Sc, Y or a combination thereof, and the lanthanide element comprises La, Pr, Nd or a combination thereof; and/or
wherein M2 and M3 each independently comprise Ca, Sr, Ba or Ra.

**6.** The solid ion conductor of any of claims 1-5,
wherein a valence of M1 is greater than a valence of M2, and ionic radii of M1 are smaller than ionic radii of M2.

**7.** The solid ion conductor of any of claims 1-6,
wherein the metal oxide is represented by Formula 2:

Formula 2 $La_{a2}Sr_{b2}Ba_{c2}M4_{d2}M5_{e2}M6_{f2}O_{3-\delta}$

wherein in Formula 2,

$0.01 \leq a2 \leq 0.5$, $0.01 \leq b2 \leq 0.5$, $0.01 \leq c2 \leq 0.5$, $0.1 \leq d2 \leq 0.9$, $0.1 \leq e2 \leq 0.9$, $0 \leq f2 < 0.2$, and $0 \leq \delta < 1$,
M4 and M5 are each independently an element belonging to one of Groups 8 to 11 of the Periodic Table,
M6 is an element belonging to one of Groups 3, 4, or 7 to 12 of the Periodic Table, and an atomic weight of the element belonging to Group 3 is 150 or more, and
$\delta$ represents an oxygen vacancy.

**8.** The solid ion conductor of any of claims 1-7,

wherein M4 and M5 each independently comprise Ni, Co, Fe, Ru, Rh, or Pd, a valence of M4 is greater than a valence of M5, and
the valence of M4 is +3 or higher, and the valence of M5 is less than +3.

**9.** The solid ion conductor of any of claims 1-8, wherein M6 comprises Zn, Mn, Yb, Ni, Cu, Ti, Ho, or a combination thereof; and/or
wherein a valence of M6 is +1, +2, +3, +4, +5, +6, or a combination thereof.

**10.** The solid ion conductor of any of claims 1-10,
wherein the metal oxide is represented by Formula 3:

Formula 3 $La_{a3}Sr_{b3}Ba_{c3}Co_{d3}Fe_{e3}O_{3-\delta}$

wherein in Formula 3,

$\leq a3 \leq 0.5$, $0.1 \leq b3 \leq 0.5$, $0.1 \leq c3 \leq 0.45$, $0.6 \leq d3 \leq 0.9$, $0.1 \leq e3 \leq 0.4$, $0 \leq \delta < 1$, and $d3 > e3$, and
$\delta$ represents an oxygen vacancy.

**11.** The solid ion conductor of any of claims 1-10,
wherein the metal oxide is represented by any one of Formulae 4A to 4G:

Formula 4A $La_{a4}Sr_{b4}Ba_{c4}Co_{d4}Fe_{e4}Zn_{f4}O_{3-\delta}$

Formula 4B $La_{a4}Sr_{b4}Ba_{c4}Co_{d4}Fe_{e4}Mn_{f4}O_{3-\delta}$

Formula 4C $La_{a4}Sr_{b4}Ba_{c4}Co_{d4}Fe_{e4}Yb_{f4}O_{3-\delta}$

Formula 4D $La_{a4}Sr_{b4}Ba_{c4}Co_{d4}Fe_{e4}Ni_{f4}O_{3-\delta}$

Formula 4E $La_{a4}Sr_{b4}Ba_{c4}Co_{d4}Fe_{e4}Cu_{f4}O_{3-\delta}$

Formula 4F $La_{a4}Sr_{b4}Ba_{c4}Co_{d4}Fe_{e4}Ti_{f4}O_{3-\delta}$

Formula 4G $La_{a4}Sr_{b4}Ba_{c4}Co_{d4}Fe_{e4}Ho_{f4}O_{3-\delta}$

wherein in Formulae 4A to 4G,

$0.1 \leq a4 \leq 0.5$, $0.1 \leq b4 \leq 0.5$, $0.1 \leq c4 \leq 0.45$, $0.6 \leq d4 \leq 0.9$, $0.1 \leq e4 \leq 0.4$, $0.1 \leq f4 \leq 0.2$, $0 \leq \delta < 1$ and $4 > e4+f4$, and
$\delta$ is an oxygen vacancy.

**12.** The solid ion conductor of any of claims 1-11, wherein an area-specific resistance of the solid ion conductor, as measured by alternating current impedance method at 700 °C, is 0.5 ohms per square centimeter or less, and

a thermal expansion coefficient of the solid ion conductor is $20 \times 10^{-6}$ inverse kelvin or less; and/or
wherein the solid ion conductor further comprising a composite of: an ionconducting metal oxide, distinct from the metal oxide having the perovskite structure; and the metal oxide having the perovskite structure.

**13.** A solid ion conductor comprising a first metal oxide having a perovskite structure,

wherein the first metal oxide comprises a first element, a second element, and a third element, disposed at cuboctahedral sites of the perovskite structure,
and comprises a fourth element and a fifth element, disposed at octahedral sites of the perovskite structure, or a fourth element, a fifth element, and a sixth element, disposed at octahedral sites of the perovskite structure,
wherein the first element is an element belonging to Group 3 of the Periodic Table,
the second element and the third element are each independently an element belonging to Group 2 of the Periodic Table and have an atomic weight of 30 or more, the fourth element and the fifth element are each independently an element belonging to one of Groups 8 to 11 of the Periodic Table,
the sixth element is an element belonging to one of Groups 3, 4, or 7 to 12 of the Periodic Table, and
wherein formation energy of the first metal oxide is -0.8 electronvolt to -10 electronvolt, compared to formation energy of a second metal oxide formed by excluding the first element from the first metal oxide.

**14.** An electrode, comprising the solid ion conductor according to any of claims 1-13, preferably wherein the electrode is an air electrode.

**15.** A solid oxide cell, comprising:

an air electrode;
a fuel electrode; and
a solid electrolyte layer disposed between the air electrode and the fuel electrode,
wherein one or more of the air electrode, the fuel electrode, and the solid electrolyte layer comprises a solid ion conductor according to any of claims 1-13;
preferably wherein the solid oxide cell is a solid oxide fuel cell or a solid oxide electrolyzer cell.

FIG. 1

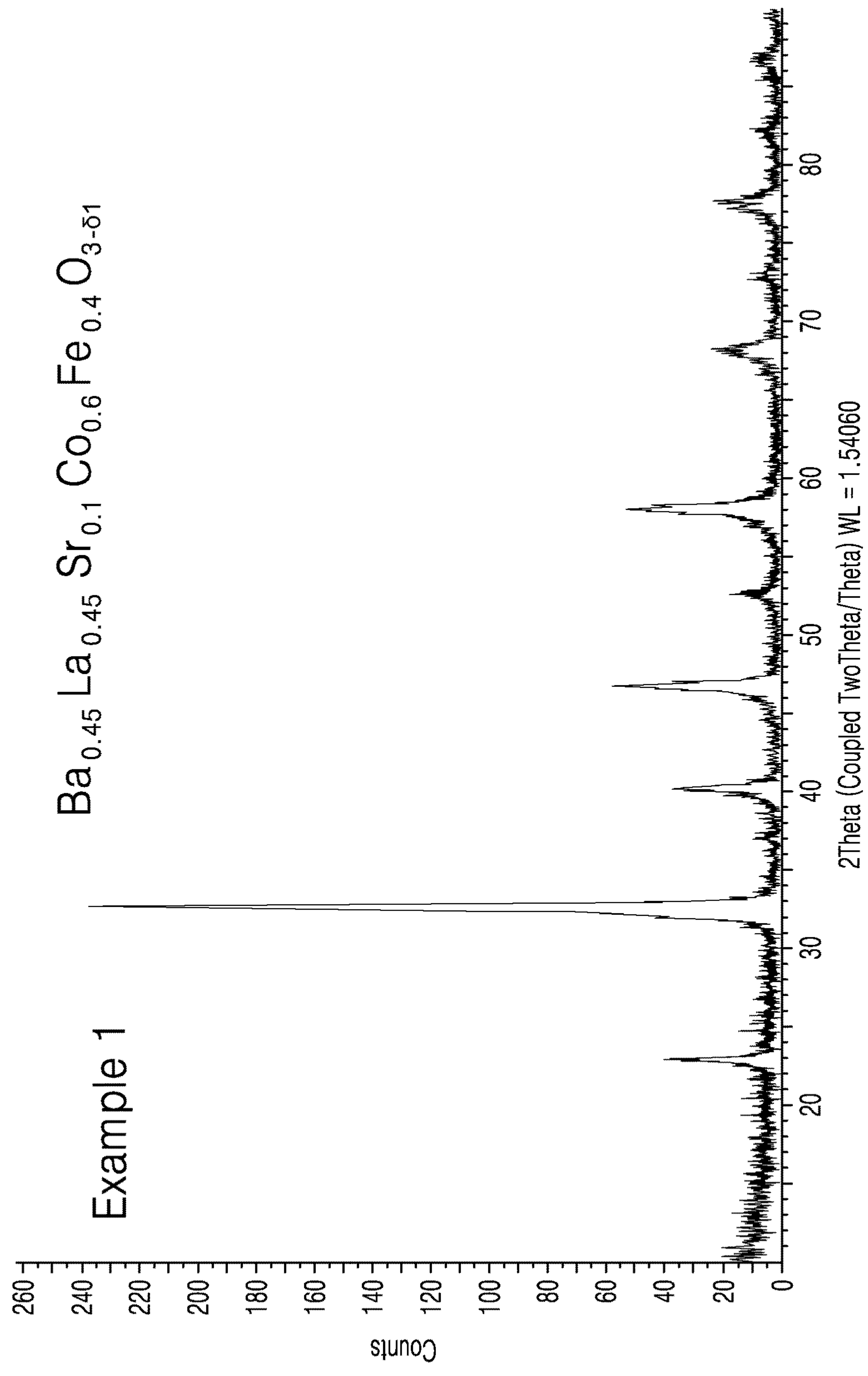
$Ba_{0.45}La_{0.45}Sr_{0.1}Co_{0.6}Fe_{0.4}O_{3-\delta 1}$
Example 1
Counts
0
20
40
60
80
100
120
140
160
180
200
220
240
260
20
30
40
50
60
70
80
2Theta (Coupled TwoTheta/Theta) WL = 1.54060

FIG. 2

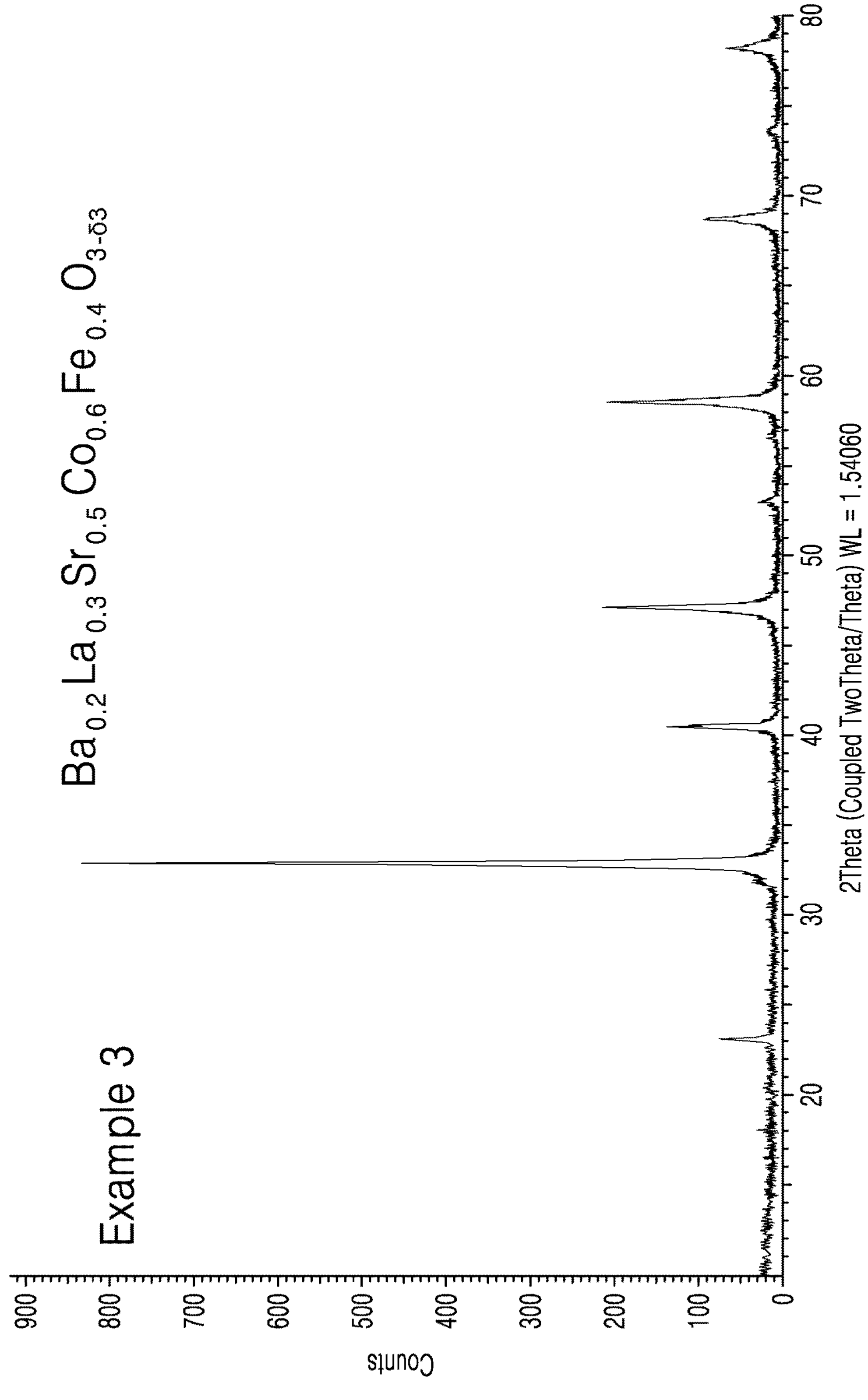
Example 3
$Ba_{0.2}La_{0.3}Sr_{0.5}Co_{0.6}Fe_{0.4}O_{3-\delta 3}$
Counts
0
100
200
300
400
500
600
700
800
900
20
30
40
50
60
70
80
2Theta (Coupled TwoTheta/Theta) WL = 1.54060

FIG. 3

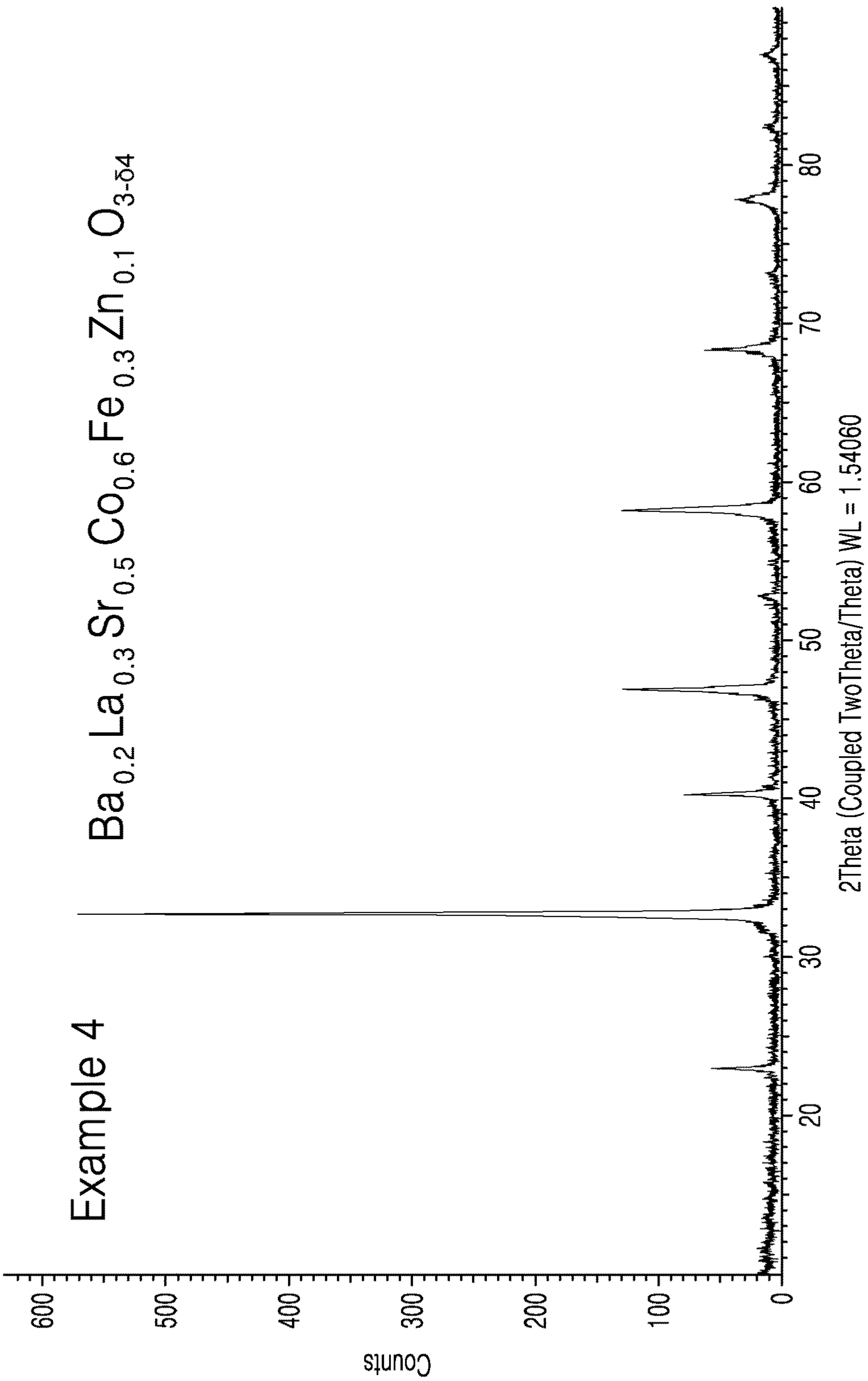
Example 4
$Ba_{0.2}La_{0.3}Sr_{0.5}Co_{0.6}Fe_{0.3}Zn_{0.1}O_{3-\delta 4}$
Counts
0
100
200
300
400
500
600
20
30
40
50
60
70
80
2Theta (Coupled TwoTheta/Theta) WL = 1.54060

FIG. 4

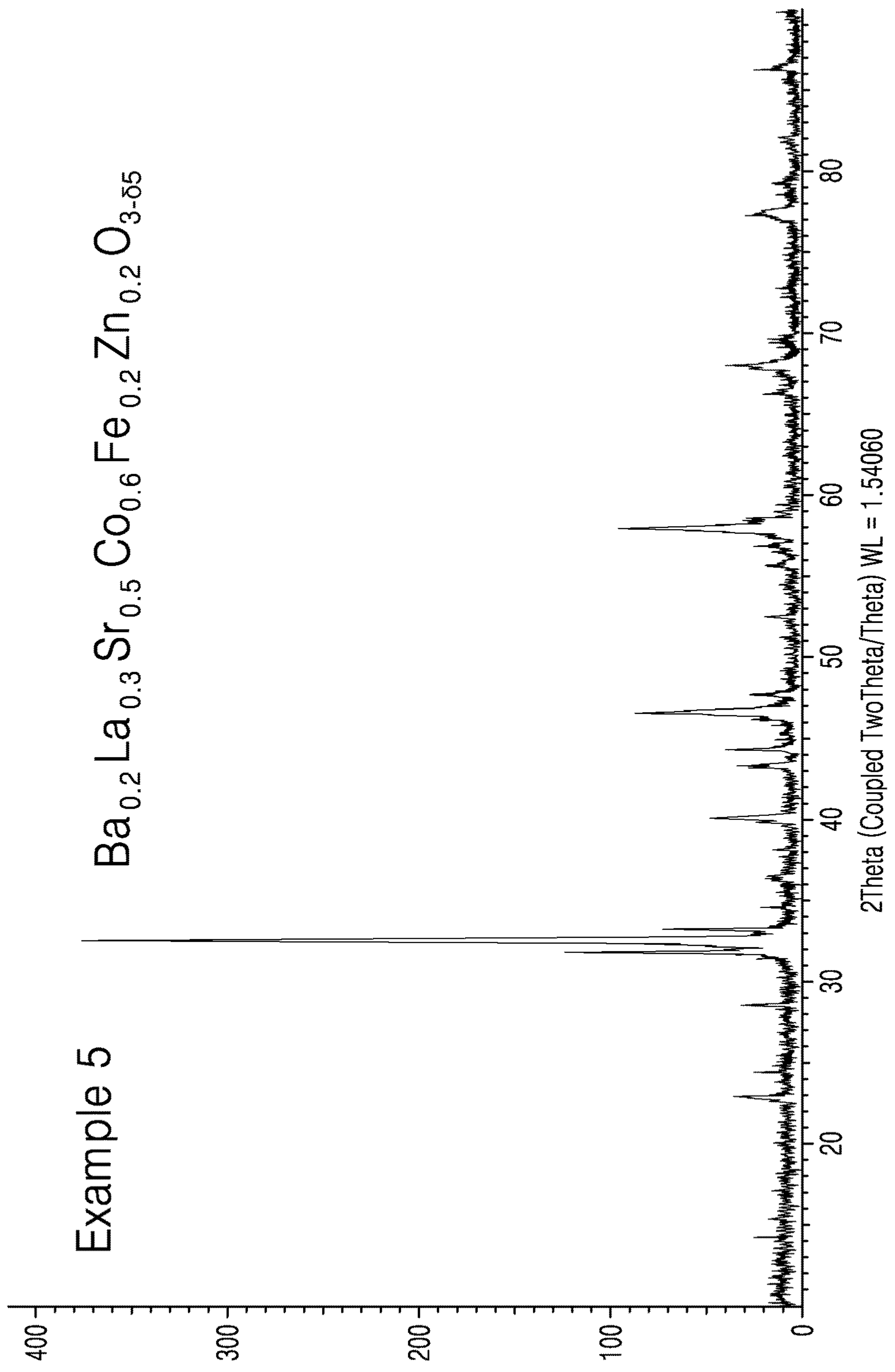

Example 5
$Ba_{0.2}La_{0.3}Sr_{0.5}Co_{0.6}Fe_{0.2}Zn_{0.2}O_{3-\delta 5}$
Counts
0
100
200
300
400
20
30
40
50
60
70
80
2Theta (Coupled TwoTheta/Theta) WL = 1.54060

FIG. 5

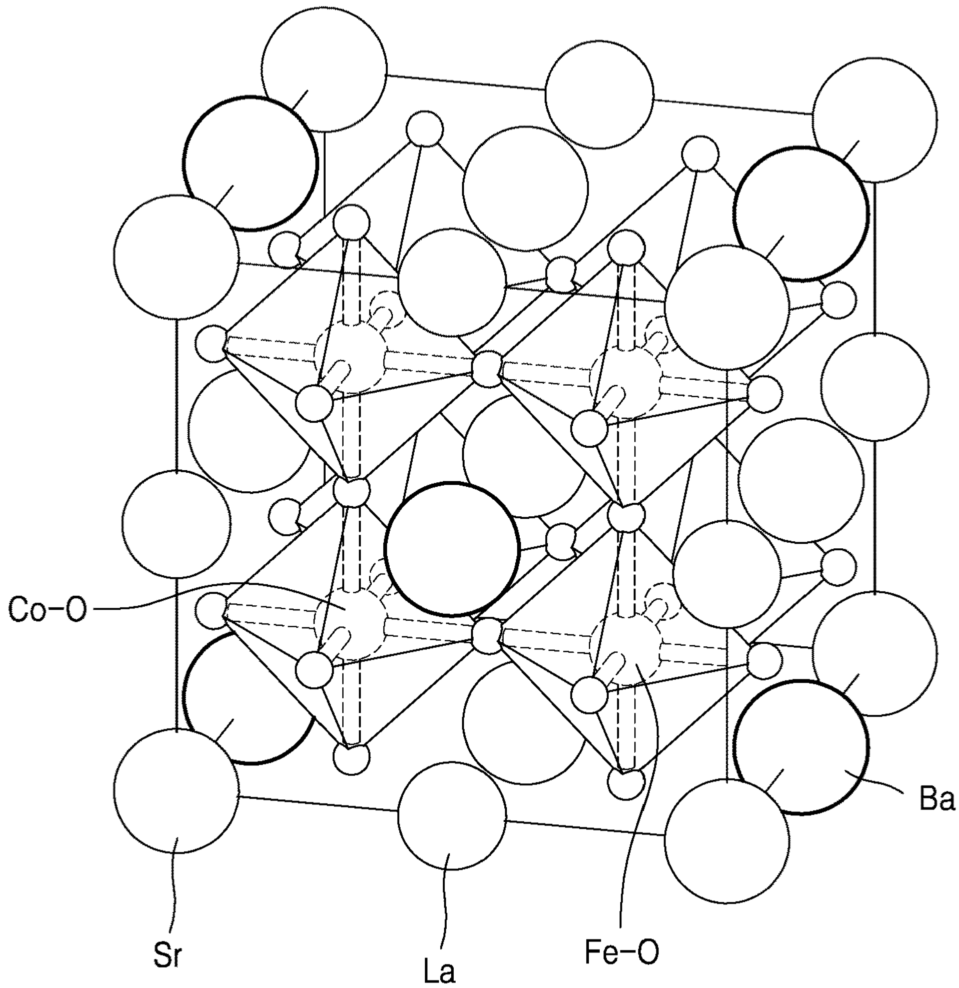

FIG. 6A

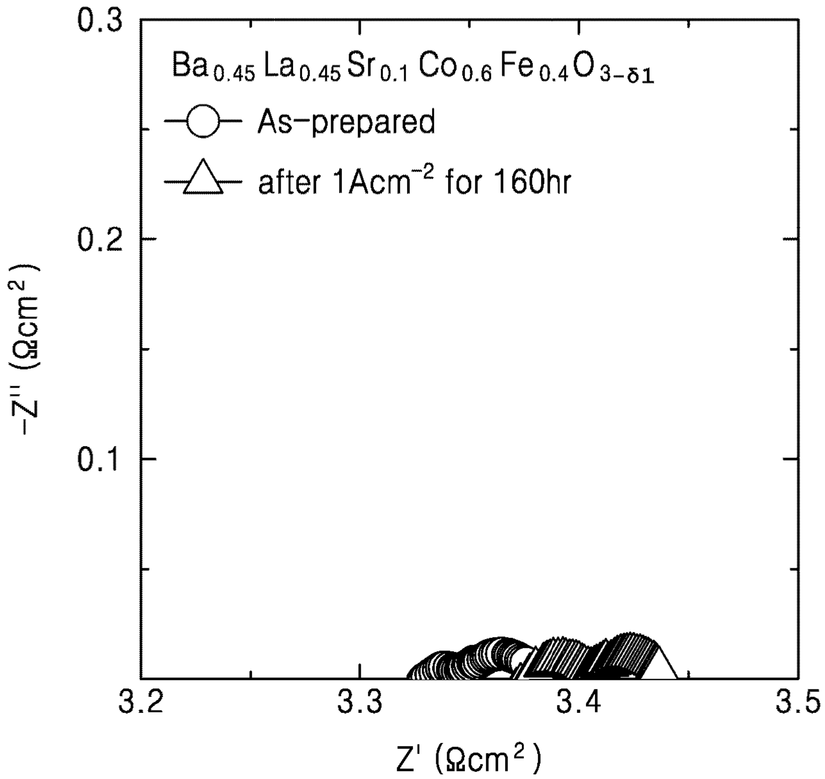

Ba0.45 La0.45 Sr0.1 Co0.6 Fe0.4 O3-δ1
As-prepared
after 1Acm-2 for 160hr
0.3
0.2
0.1
-Z'' (Ωcm2)
3.2
3.3
3.4
3.5
Z' (Ωcm2)

FIG. 6B

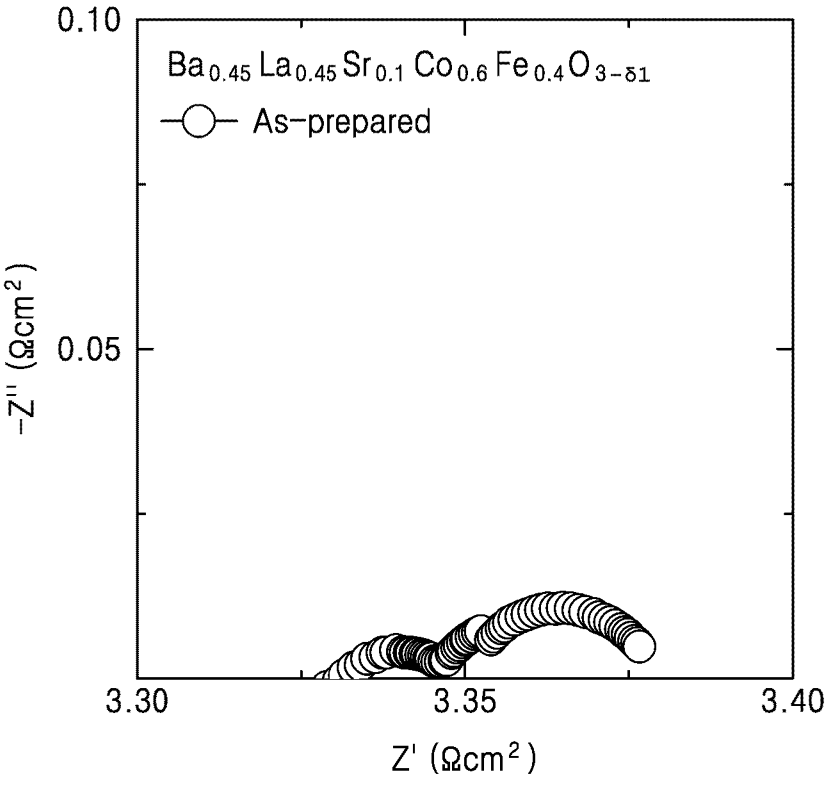
0.10
0.05
3.30
3.35
3.40
Ba0.45 La0.45 Sr0.1 Co0.6 Fe0.4 O3-δ1
As-prepared
-Z'' (Ωcm2)
Z' (Ωcm2)

FIG. 6C

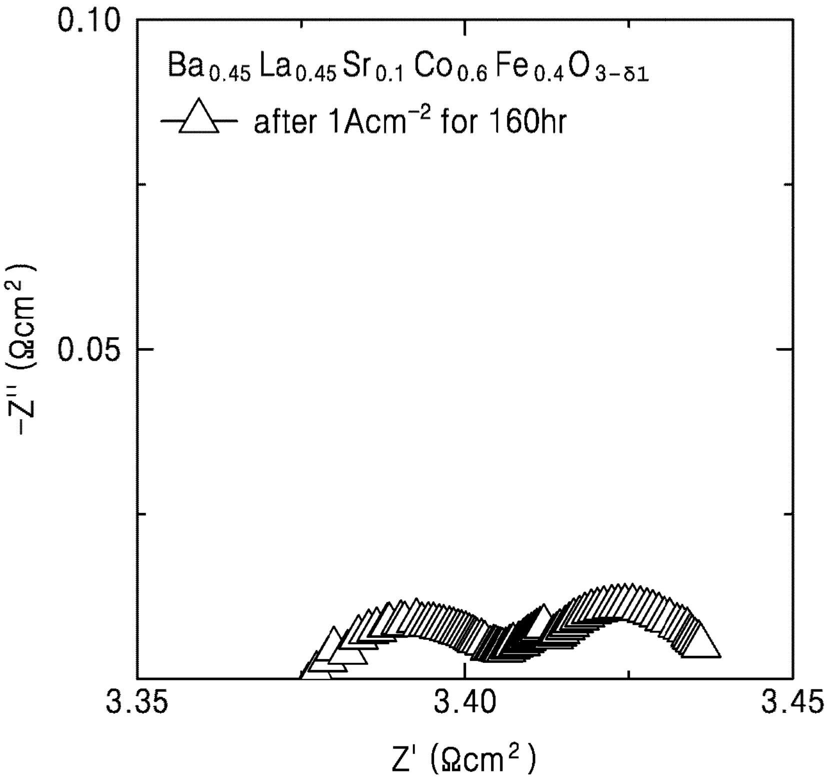
$Ba_{0.45}La_{0.45}Sr_{0.1}Co_{0.6}Fe_{0.4}O_{3-\delta1}$
after $1Acm^{-2}$ for 160hr
0.10
0.05
-Z'' (Ωcm²)
3.35
3.40
3.45
Z' (Ωcm²)

FIG. 6D

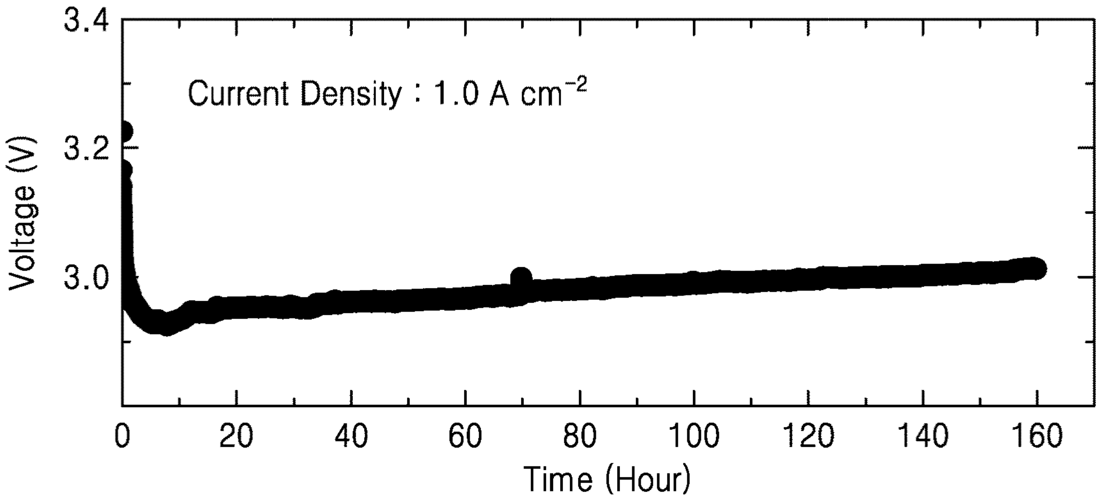
Current Density : 1.0 A cm$^{-2}$
Voltage (V)
3.4
3.2
3.0
Time (Hour)
0
20
40
60
80
100
120
140
160

# FIG. 7A

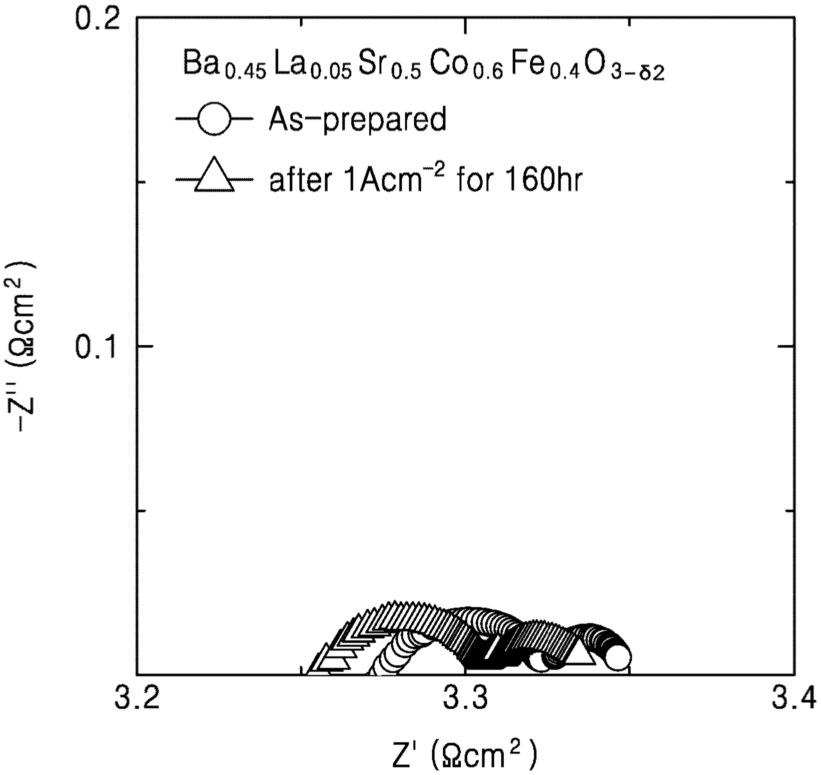

0.2
0.1
3.2
3.3
3.4
-Z'' (Ωcm²)
Z' (Ωcm²)
Ba0.45La0.05Sr0.5Co0.6Fe0.4O3-δ2
As-prepared
after 1Acm⁻² for 160hr

FIG. 7B

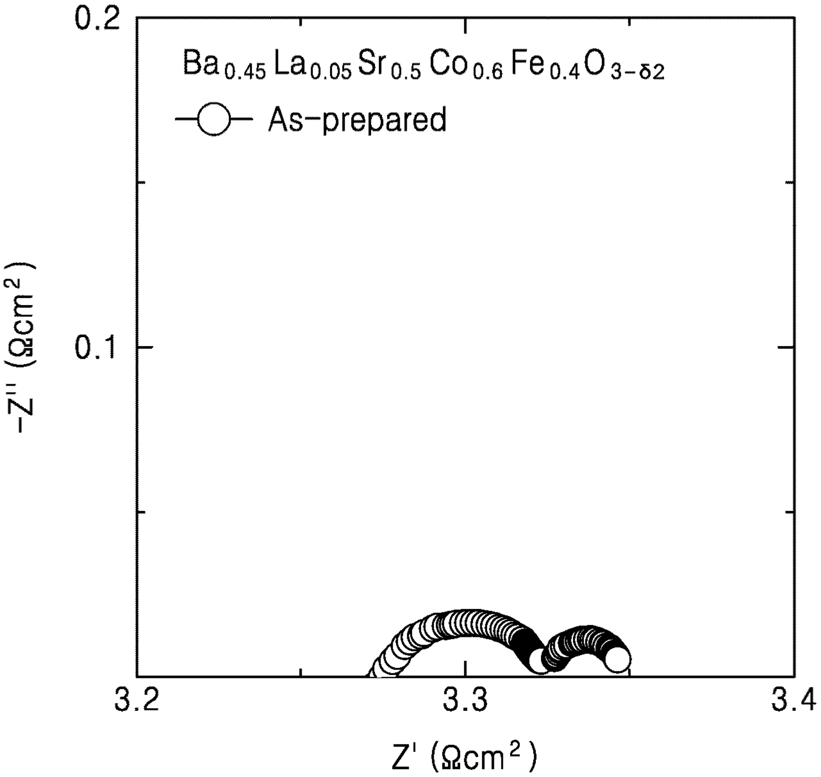
0.2
0.1
3.2
3.3
3.4
Ba 0.45 La 0.05 Sr 0.5 Co 0.6 Fe 0.4 O 3-δ2
As-prepared
-Z'' (Ωcm²)
Z' (Ωcm²)

FIG. 7C

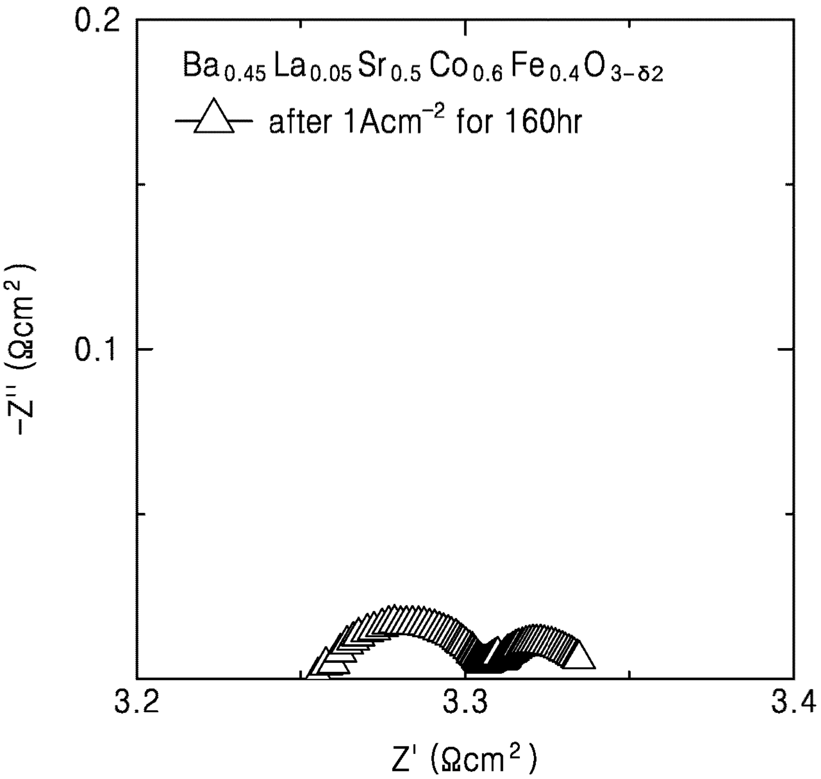
0.2
0.1
3.2
3.3
3.4
-Z'' (Ωcm²)
Z' (Ωcm²)
Ba0.45 La0.05 Sr0.5 Co0.6 Fe0.4 O3-δ2
after 1Acm-2 for 160hr

FIG. 7D

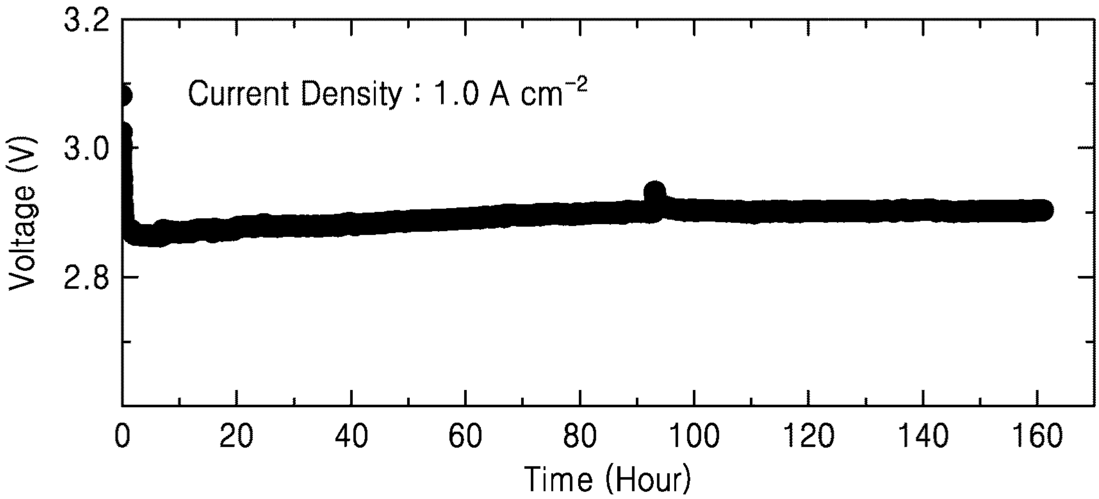
Current Density : 1.0 A cm⁻²
Voltage (V)
Time (Hour)
3.2
3.0
2.8
0
20
40
60
80
100
120
140
160

FIG. 8A

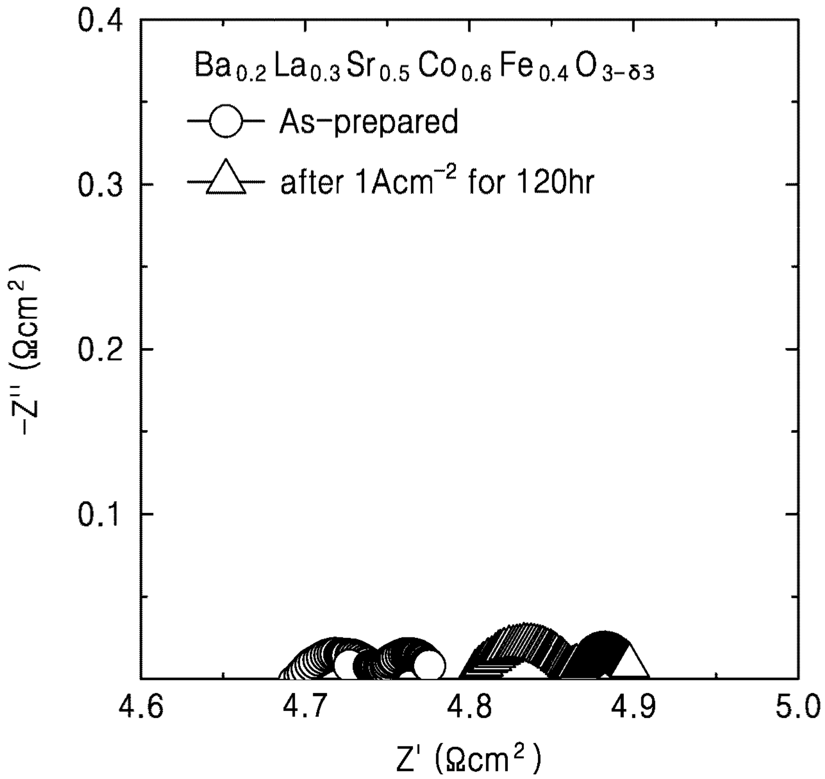
0.4
0.3
0.2
0.1
-Z'' (Ωcm²)
Ba0.2 La0.3 Sr0.5 Co0.6 Fe0.4 O3-δ3
As-prepared
after 1Acm⁻² for 120hr
4.6
4.7
4.8
4.9
5.0
Z' (Ωcm²)

FIG. 8B

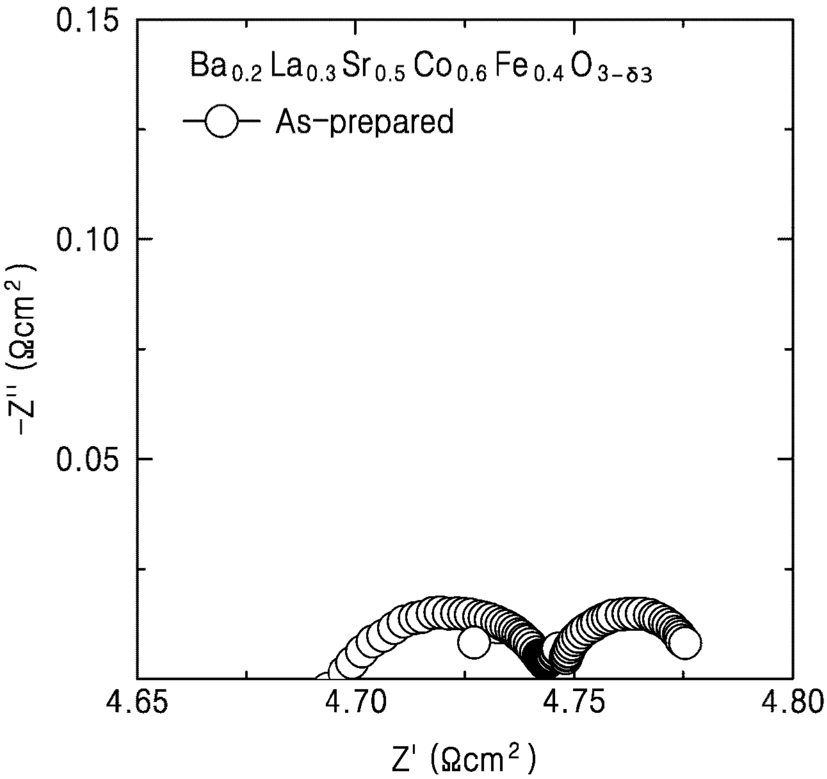
0.15
0.10
0.05
-Z'' (Ωcm²)
Ba0.2 La0.3 Sr0.5 Co0.6 Fe0.4 O3-δ3
As-prepared
4.65
4.70
4.75
4.80
Z' (Ωcm²)

FIG. 8C

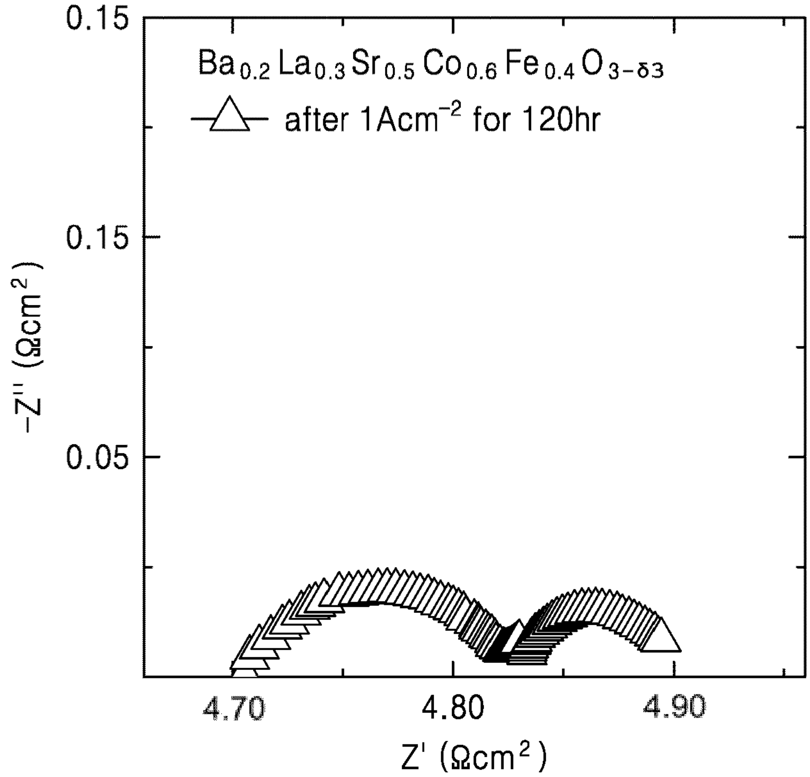
0.15
0.15
0.05
$Ba_{0.2}La_{0.3}Sr_{0.5}Co_{0.6}Fe_{0.4}O_{3-\delta 3}$
after 1Acm$^{-2}$ for 120hr
-Z'' (Ωcm$^2$)
4.70
4.80
4.90
Z' (Ωcm$^2$)

# FIG. 8D

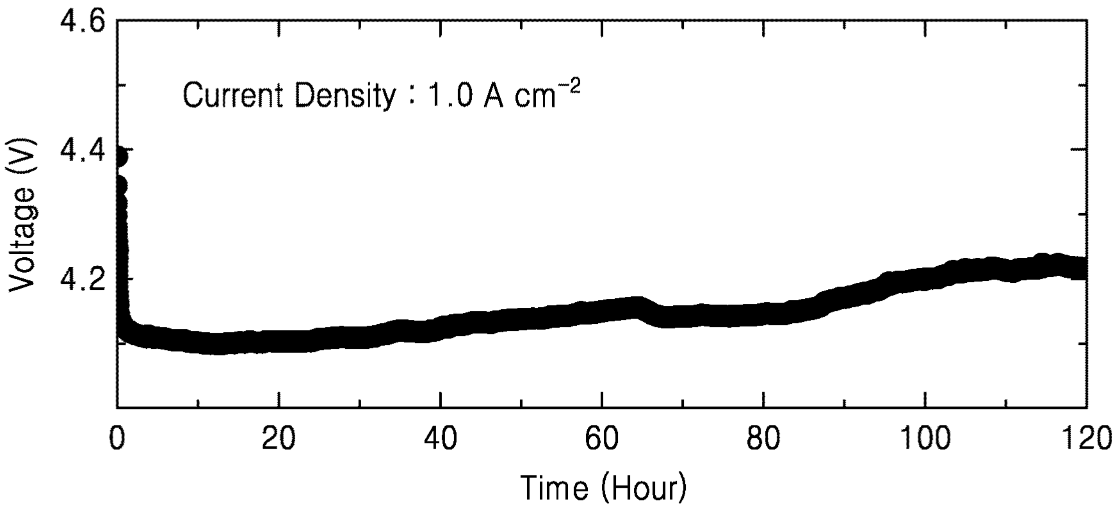
Current Density : 1.0 A cm⁻²
Voltage (V)
4.6
4.4
4.2
0
20
40
60
80
100
120
Time (Hour)

# FIG. 9A

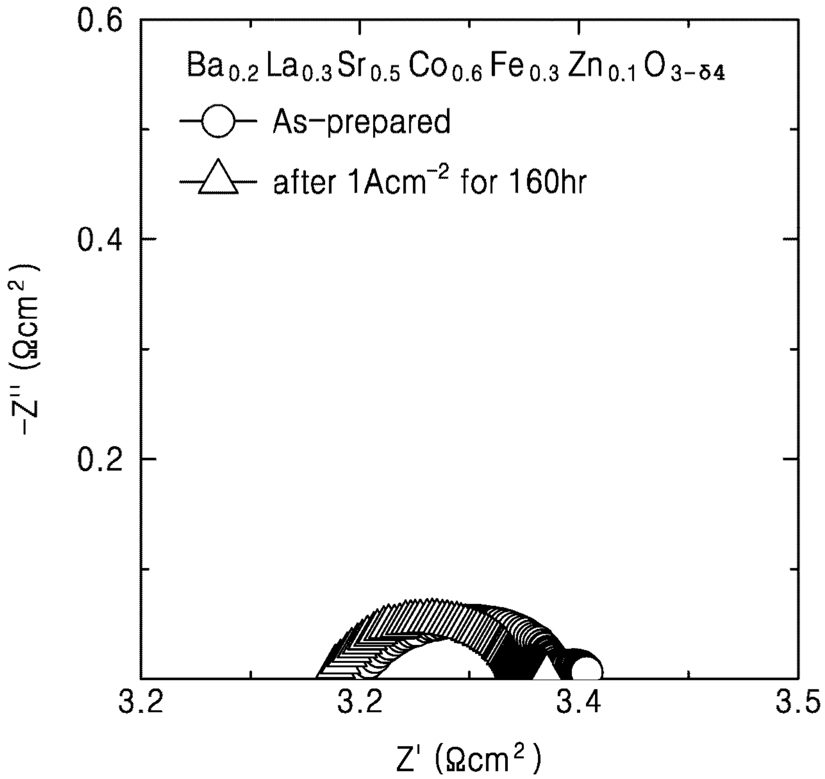
$Ba_{0.2}La_{0.3}Sr_{0.5}Co_{0.6}Fe_{0.3}Zn_{0.1}O_{3-δ4}$
As-prepared
after $1Acm^{-2}$ for 160hr
0.6
0.4
0.2
$-Z''$ ($Ωcm^2$)
3.2
3.2
3.4
3.5
$Z'$ ($Ωcm^2$)

FIG. 9B

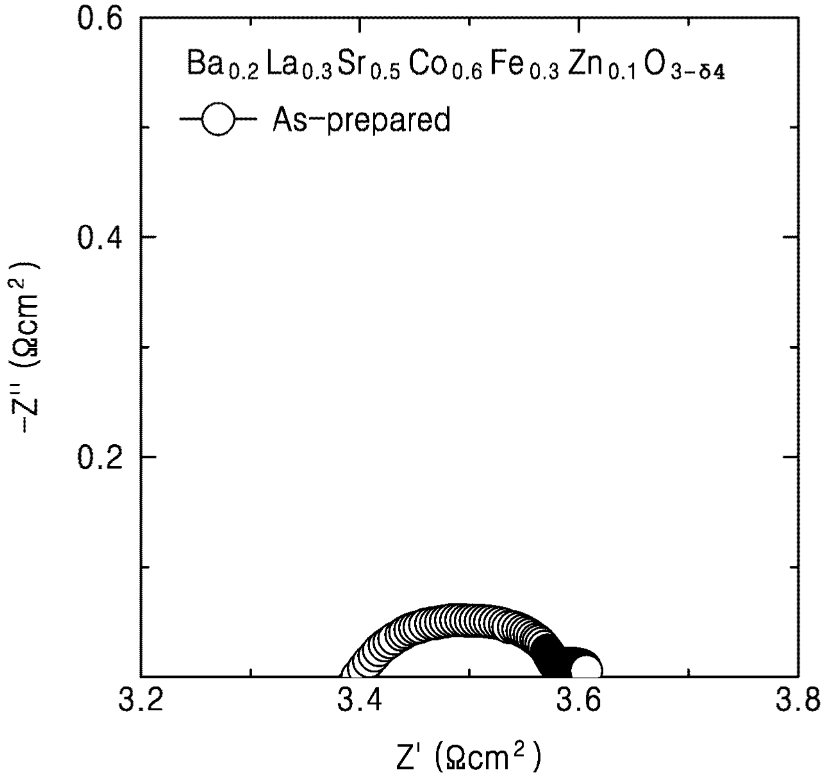
0.6
0.4
0.2
3.2
3.4
3.6
3.8
-Z'' (Ωcm²)
Z' (Ωcm²)
Ba0.2La0.3Sr0.5Co0.6Fe0.3Zn0.1O3-δ4
As-prepared

FIG. 9C

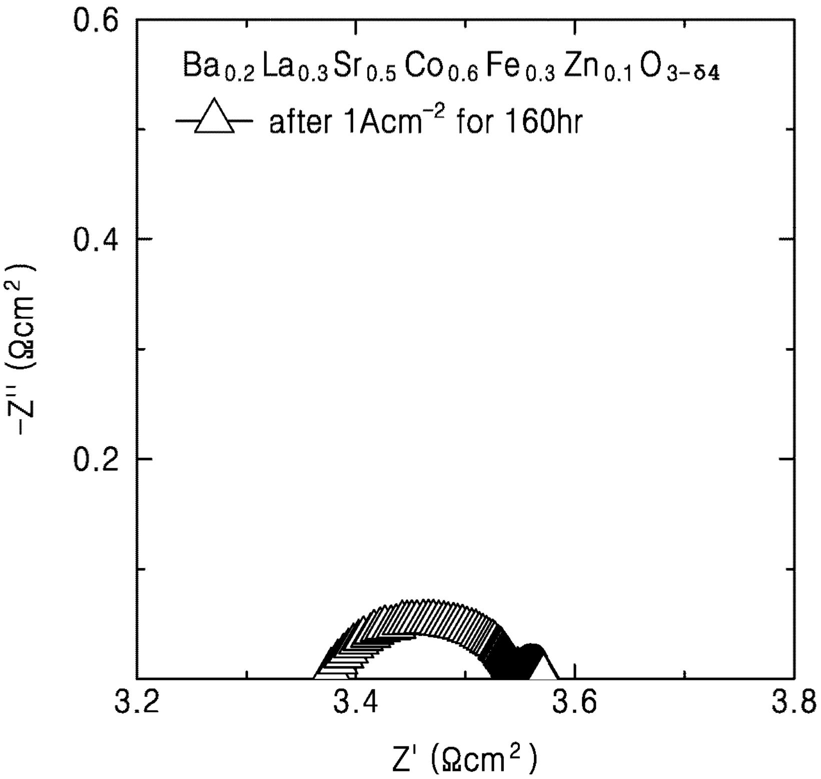

$Ba_{0.2}La_{0.3}Sr_{0.5}Co_{0.6}Fe_{0.3}Zn_{0.1}O_{3-\delta 4}$
after $1Acm^{-2}$ for 160hr
0.6
0.4
0.2
-Z'' ($\Omega cm^2$)
3.2
3.4
3.6
3.8
Z' ($\Omega cm^2$)

FIG. 9D

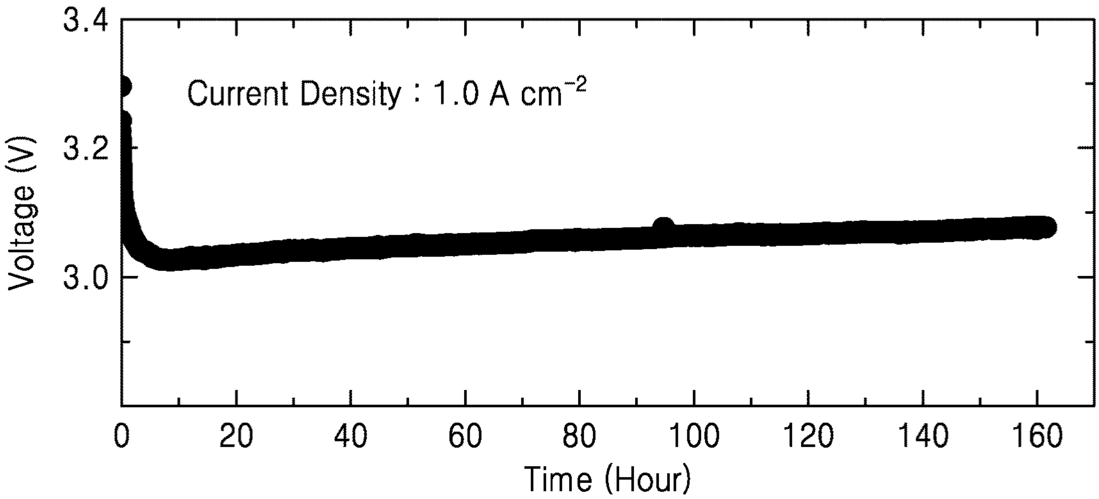
Current Density : 1.0 A cm$^{-2}$
Voltage (V)
3.4
3.2
3.0
0
20
40
60
80
100
120
140
160
Time (Hour)

FIG. 10A

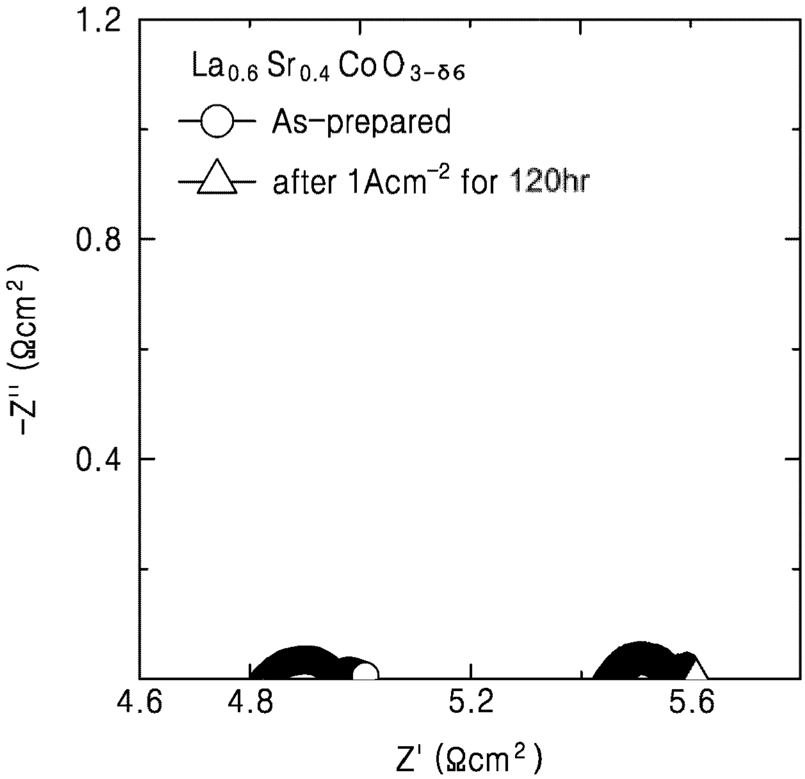
1.2
0.8
0.4
-Z'' (Ωcm²)
La0.6 Sr0.4 Co O3-δ6
As-prepared
after 1Acm⁻² for 120hr
4.6
4.8
5.2
5.6
Z' (Ωcm²)

FIG. 10B

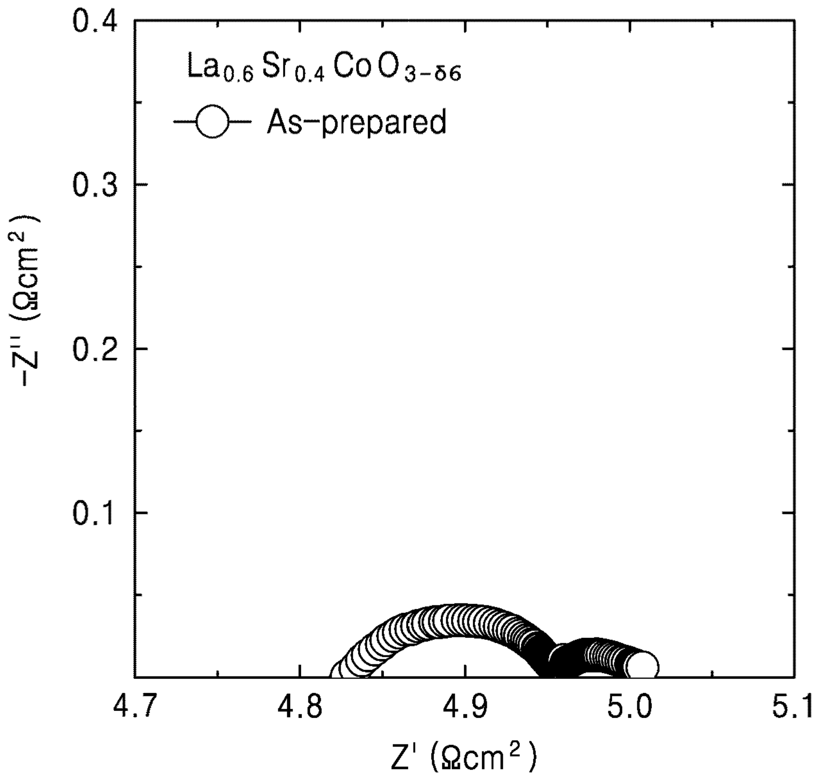
La0.6 Sr0.4 Co O3-δ6
As-prepared
0.4
0.3
0.2
0.1
-Z'' (Ωcm2)
4.7
4.8
4.9
5.0
5.1
Z' (Ωcm2)

FIG. 10C

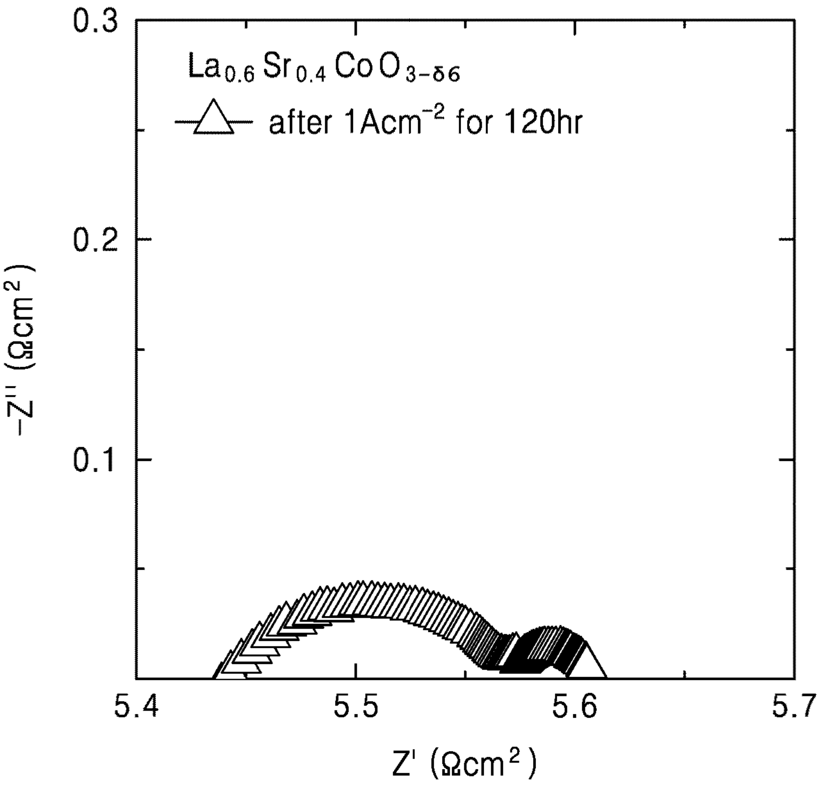
0.3
0.2
0.1
−Z'' (Ωcm²)
La0.6 Sr0.4 Co O3−δ6
after 1Acm⁻² for 120hr
5.4
5.5
5.6
5.7
Z' (Ωcm²)

# FIG. 10D

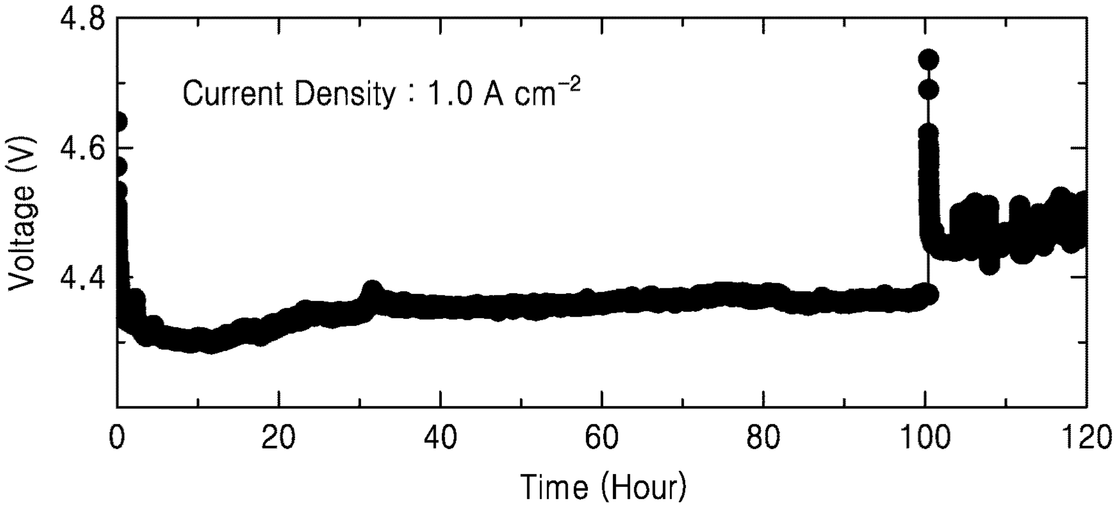
Current Density : 1.0 A cm⁻²
Voltage (V)
4.8
4.6
4.4
0
20
40
60
80
100
120
Time (Hour)

FIG. 11

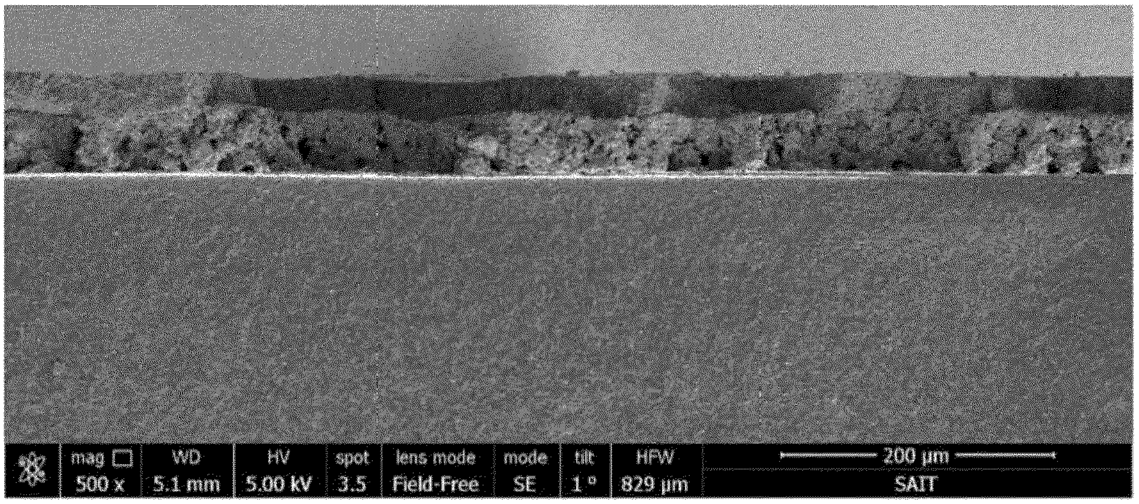
mag
500 x
WD
5.1 mm
HV
5.00 kV
spot
3.5
lens mode
Field-Free
mode
SE
tilt
1 °
HFW
829 µm
200 µm
SAIT

FIG. 12

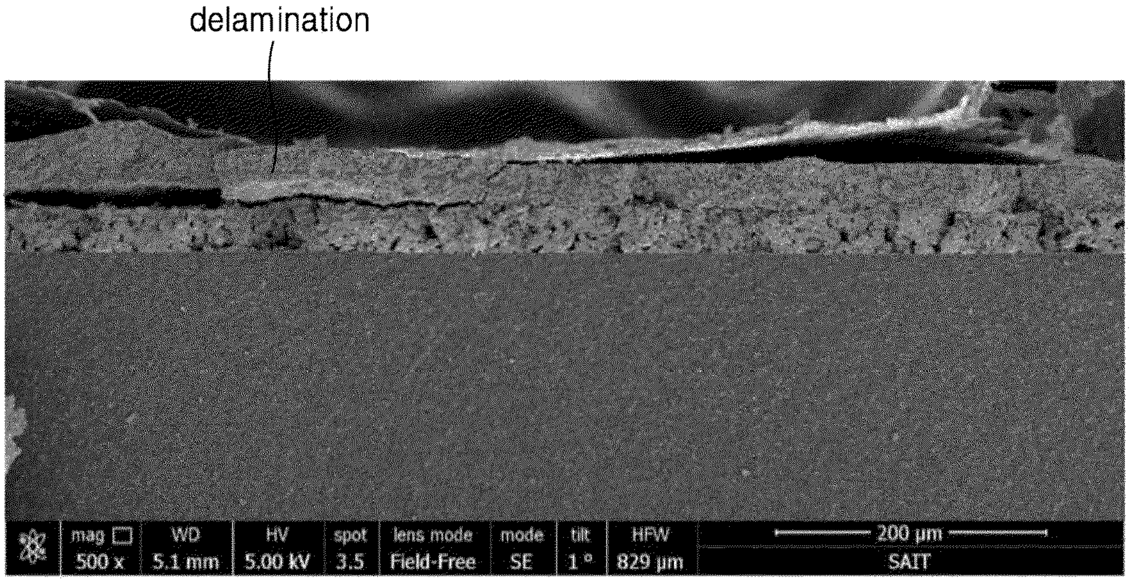
delamination
mag □ 500 x
WD 5.1 mm
HV 5.00 kV
spot 3.5
lens mode Field-Free
mode SE
tilt 1 °
HFW 829 µm
200 µm
SAIT

FIG. 13

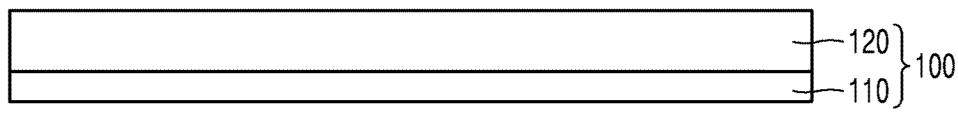

FIG. 14

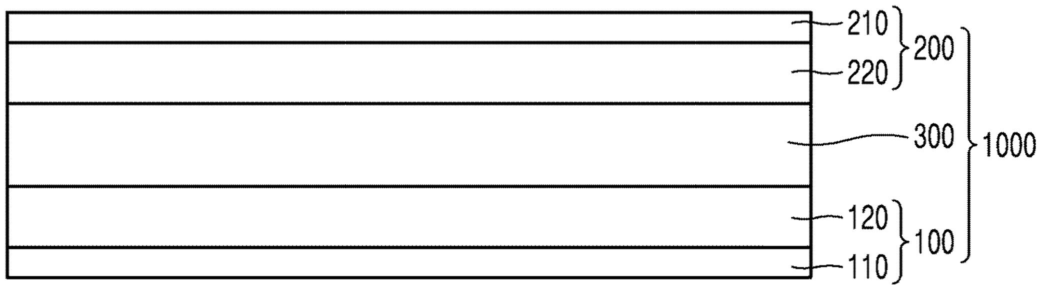

FIG. 15

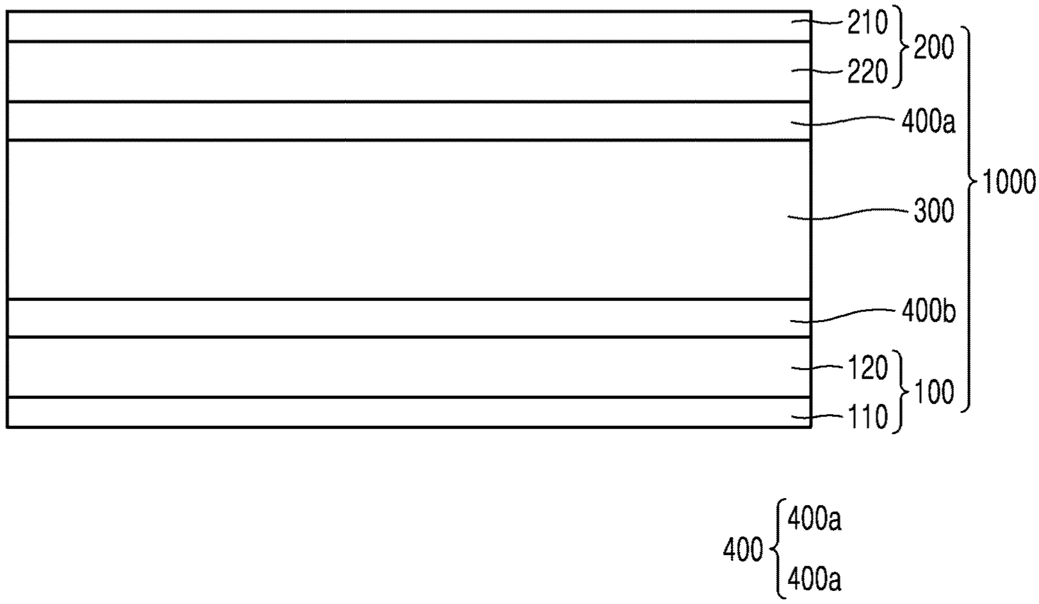

FIG. 16

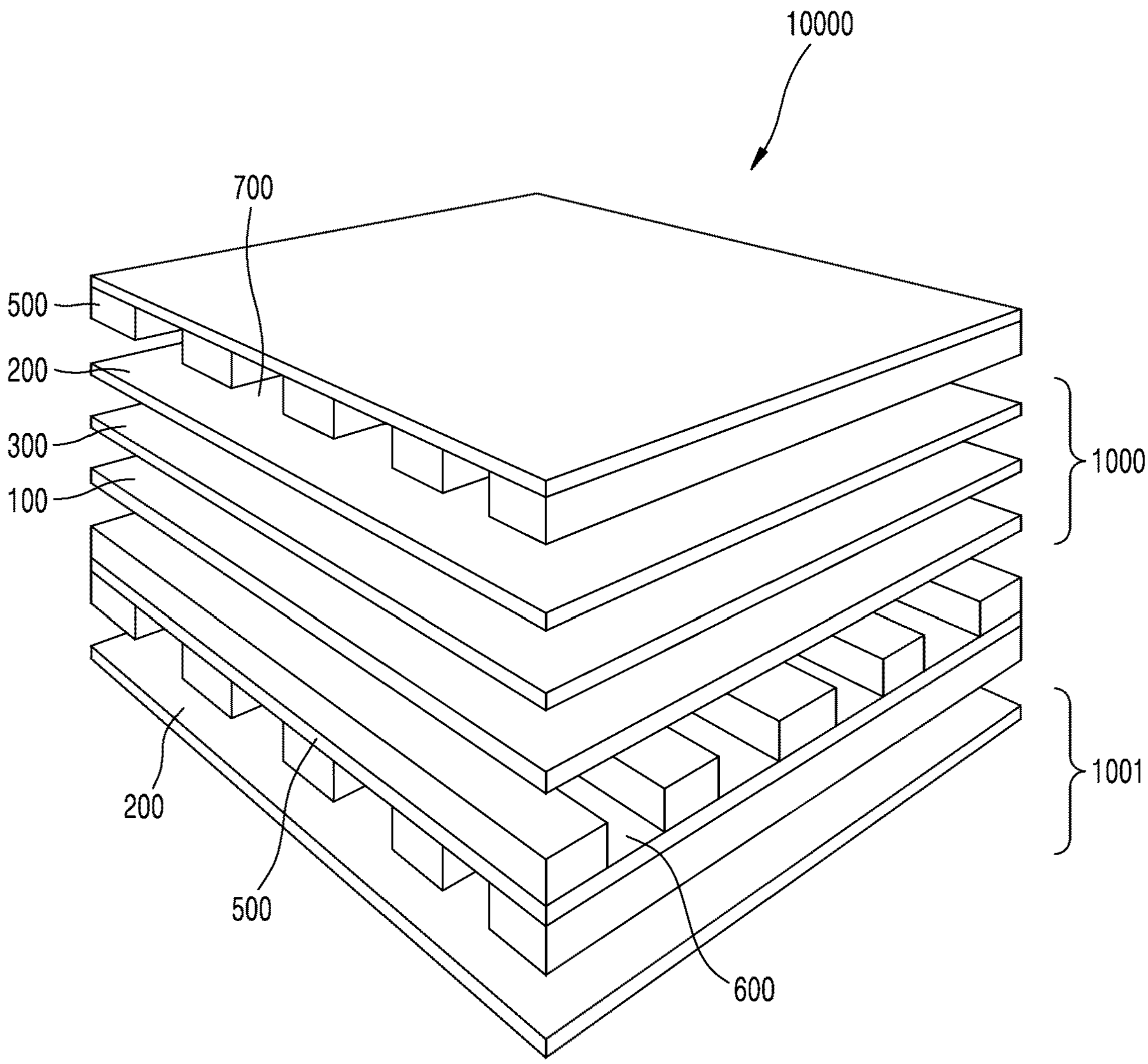

Europäisches Patentamt
European Patent Office
Office européen des brevets

# EUROPEAN SEARCH REPORT

Application Number
EP 25 20 3931

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALIOTTA CHIARA ET AL: "Peculiar Properties of the La0.25Ba0.25Sr0.5Co0.8Fe0.2O3-[delta] Perovskite as Oxygen Reduction Electrocatalyst", MOLECULES, vol. 28, no. 4, 8 February 2023 (2023-02-08), page 1621, XP093379808, CH ISSN: 1420-3049, DOI: 10.3390/molecules28041621 | 1,7,10, 11 | INV. C01G51/68 |
| Y | * table 1 * | 1-15 | |
| Y | DEY SHOROSHI ET AL: "Advancing insights towards electrocatalytic activity of La/Ba-Sr-Co-Fe-O-based perovskites for oxygen reduction & evolution process in reversible solid oxide cell", SCRIPTA MATERIALIA, vol. 229, 28 February 2023 (2023-02-28), page 115380, XP093379803, NL ISSN: 1359-6462, DOI: 10.1016/j.scriptamat.2023.115380 * the whole document * | 1-15 | |
| X | EP 0 732 305 B1 (AIR PROD & CHEM [US]) 18 August 1999 (1999-08-18) | 1 | |
| Y | * examples 1-3 * | 1-11 | |
| X | US 2021/036354 A1 (IDE SHINGO [JP] ET AL) 4 February 2021 (2021-02-04) | 1 | |
| Y | * paragraph [[0070]]; example 1 * | 1-15 | |

| TECHNICAL FIELDS SEARCHED (IPC) |
|---|
| C01G |

The present search report has been drawn up for all claims

1

| Place of search | Date of completion of the search | Examiner |
|---|---|---|
| Munich | 23 March 2026 | Timmermans, Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 20 3931

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2026

| Patent document cited in search report | Publication date | Patent family member(s) | Publication date |
|---|---|---|---|
| EP 0732305 B1 | 18-08-1999 | CA 2171667 A1 | 14-09-1996 |
| | | DE 69603762 T2 | 09-03-2000 |
| | | EP 0732305 A1 | 18-09-1996 |
| US 2021036354 A1 | 04-02-2021 | CN 111919113 A | 10-11-2020 |
| | | EP 3783354 A1 | 24-02-2021 |
| | | JP 7278266 B2 | 19-05-2023 |
| | | JP WO2019203219 A1 | 27-05-2021 |
| | | TW 201944642 A | 16-11-2019 |
| | | US 2021036354 A1 | 04-02-2021 |
| | | WO 2019203219 A1 | 24-10-2019 |

EPO FORM P0459

For more details about this annex : see Official Journal of the European Patent Office, No. 12/82